# EUROPEAN PATENT SPECIFICATION

(11) **EP 3 493 548 B1**
(45) Date of publication and mention of the grant of the patent: **26.01.2022**
(21) Application number: 17834115.2
(22) Date of filing: 19.07.2017
(51) Int. Cl.: H04N 21/235, H04N 21/435, H04N 21/236, H04N 7/088, H04N 21/488, H04N 21/854, H04N 21/61

(54) **TRANSMISSION DEVICE, TRANSMISSION METHOD, RECEPTION DEVICE, AND RECEPTION METHOD**
SENDEVORRICHTUNG, SENDEVERFAHREN, EMPFANGSVORRICHTUNG UND EMPFANGSVERFAHREN
DISPOSITIF ET PROCÉDÉ D'ÉMISSION, DISPOSITIF ET PROCÉDÉ DE RÉCEPTION

(30) Priority: 26.07.2016 JP 2016146812
(43) Date of publication of application: 05.06.2019
(60) Divisional application: 21204372.3
(73) Proprietor: Sony Group Corporation, Tokyo 108-0075 (JP)
(72) Inventor: TSUKAGOSHI, Ikuo, Tokyo 108-0075 (JP); TAKABAYASHI, Kazuhiko, Tokyo 108-0075 (JP)
(74) Representative: 2SPL Patentanwälte PartG mbB
(86) International application number: PCT/JP2017/026080
(87) International publication number: WO 2018/021107

(56) References cited:
- WO-A1-2006/090908
- WO-A1-2016/098790
- WO-A1-2016/098790
- JP-A- 2008 193 203
- JP-A- 2008 193 203
- JP-A- 2015 159 363
- JP-A- 2016 110 645
- JP-A- 2016 110 645
- US-A1- 2009 303 382
- US-A1- 2013 185 760

## Description

### TECHNICAL FIELD

The present technology relates to a transmission device, a transmission method, a reception device, and a reception method, and particularly relates to, for example, a transmission device that transmits a document of subtitle text information.

### BACKGROUND ART

Conventionally, for example, management of transmitting subtitle information in bitmap data, has been performed in broadcasting, such as digital video broadcasting (DVB). In recent years, transmitting subtitle information in a character code of text, namely, on a text basis, has been proposed. In this case, font development corresponding to resolution is performed on the reception side.

Furthermore, in a case where subtitle information is transmitted on a text basis, causing text information to have timing information has been proposed. As the text information, for example, Timed Text Markup Language (TTML) has been advocated by the World Wide Web Consortium (W3C) (refer to Patent Document 1).

Patent Document 2 further proposes a streaming device for streaming data in the MP4 format, including subtitle data stored in fragment boxes. The subtitle data contains TTML document instances which are identified by instance classification distinguishing information.

Patent Document 3 proposes a method for adapting the display time of subtitle data taking into account the time necessary for processing the encoded subtitle data, which is dependent on the size of the encoded data, and the subtitle presentation time.

Patent Document 4 proposes a reproduction that enables the correct display of subtitles after conversion from TS to PS, even during trick play modes. The beginning of a subtitle, divided into subtitle packets is the time stamp aligned with the beginning of an I-picture, divided into I-picture packets.

Patent Document 5 proposes a content reproduction device that reproduces content items containing audio, video and subtitles organized in a specified data structure. Each content item is split into segment data items which are described in a XML file. Each segment data item corresponds to a plurality of segments of playback time periods. To each playback time period corresponds a group of subtitle data items that are reproduced within each of the time periods.

Patent Document 6 proposes a reproduction device that controls the display of timed subtitles. A subtitle encoder generates a subtitle stream having the text information and the display timing information. The subtitles are in the TTML format. The display start time is indicated in the PTS of a PES packet and the text information and display timing is indicated in the PES payload.

Patent Document 7 proposes TTML subtitle transmission management per regions and samples with start and end time.

### CITATION LIST

### PATENT DOCUMENT

Patent Document 1: Japanese Patent Application Laid-Open No. 2012-169885
Patent Document 2: US 2009/303382 A1
Patent Document 3: WO 2016/098790 A1
Patent Document 4: JP 2008 193203 A
Patent Document 5: US 2013/185760 A1
Patent Document 6: WO 2006/090908 A1
Patent Document 7: JP 2016 110645 A

### SUMMARY OF THE INVENTION

### PROBLEMS TO BE SOLVED BY THE INVENTION

An object of the present technology is to improve the transport efficiency of a document of subtitle text information. Alternatively, an object of the present technology is to allow region display end processing to be performed properly on the reception side in live delivery.

### SOLUTIONS TO PROBLEMS

According to a concept of the present technology, a transmission device for transmitting a plurality of subtitles for different regions comprises:
a packet generation unit configured to generate for each of a plurality of consecutive samples of variable duration a respective Packetized Elementary Stream, PES, packet comprising a Timed Text Markup Language, TTML, document of subtitle text information in a payload, wherein each TTML document of subtitle text information comprises display timing information for the related sample, wherein each display timing information indicates at least a display start time for a subtitle of the plurality of subtitles that is to be displayed in the related sample, wherein the display timing information in a first PES packet of the PES packets does not indicate a display end time for the subtitle, wherein the display timing information in a succeeding second PES packet of the PES packets indicates the display end time for the subtitle, and wherein display of the subtitle is to be ended in the sample related to the second PES packet; and
a transmission unit configured to transmit the PES packets as a subtitle stream,
   wherein for each of the plurality of consecutive samples a start time of the respective sample coincides with the display start time for one of the plurality of subtitles or an end time of the respective sample coincides with a display end time for one of the plurality of subtitles.

According to a concept of the present technology, a reception device for receiving a plurality of subtitles for different regions comprises:
a reception unit configured to receive for each of a plurality of consecutive samples of variable duration a respective Packetized Elementary Stream, PES, packet comprising a Timed Text Markup Language, TTML, document of subtitle text information in a payload, wherein each TTML document of subtitle text information comprises display timing information for the related sample, wherein each display timing information indicates at least a display start time for a subtitle of the plurality of subtitles that is to be displayed in the related sample, and wherein for each of the plurality of consecutive samples a start time of the respective sample coincides with the display start time for one of the plurality of subtitles or an end time of the respective sample coincides with a display end time for one of the plurality of subtitles; and
a control unit configured to control subtitle display based on the TTML documents of subtitle text information disposed in the PES packets, wherein the display timing information in a first PES packet of the PES packets does not indicate a display end time for the subtitle, wherein the display timing information in a succeeding second PES packet of the PES packets indicates the display end time for the subtitle, wherein display of the subtitle is to be ended in the sample related to the second PES packet, and wherein the control unit is configured to end subtitle display based on the display timing information disposed in the second PES packet.

According to a concept of the present technology, a transmission method for transmitting a plurality of subtitles for different regions comprises:
generating for each of a plurality of consecutive samples of variable duration a respective Packetized Elementary Stream, PES, packet comprising a Timed Text Markup Language, TTML, document of subtitle text information in a payload, wherein each TTML document of subtitle text information comprises display timing information for the related sample, wherein each display timing information indicates at least a display start time for a subtitle of the plurality of subtitles that is to be displayed in the related sample, wherein the display timing information in a first PES packet of the PES packets does not indicate a display end time for the subtitle, wherein the display timing information in a succeeding second PES packet of the PES packets indicates the display end time for the subtitle, and wherein display of the subtitle is to be ended in the sample related to the second PES packet; and
transmitting the PES packets as a subtitle stream, wherein for each of the plurality of consecutive samples a start time of the respective sample coincides with the display start time for one of the plurality of subtitles or an end time of the respective sample coincides with a display end time for one of the plurality of subtitles.

According to a concept of the present technology, a reception method for receiving a plurality of subtitles for different regions comprises:
receiving for each of a plurality of consecutive samples of variable duration a respective Packetized Elementary Stream, PES, packet comprising a Timed Text Markup Language, TTML, document of subtitle text information in a payload, wherein each TTML document of subtitle text information comprises display timing information for the related sample, wherein each display timing information indicates at least a display start time for a subtitle of the plurality of subtitles that is to be displayed in the related sample, and wherein for each of the plurality of consecutive samples a start time of the respective sample coincides with the display start time for one of the plurality of subtitles or an end time of the respective sample coincides with a display end time for one of the plurality of subtitles; and
controlling subtitle display based on the TTML documents of subtitle text information disposed in the PES packets, wherein the display timing information in a first PES packet of the PES packets does not indicate a display end time for the subtitle, wherein the display timing information in a succeeding second PES packet of the PES packets indicates the display end time for the subtitle, wherein display of the subtitle is to be ended in the sample related to the second PES packet, and wherein the subtitle display is ended based on the display timing information disposed in the second PES packet.

### EFFECTS OF THE INVENTION

According to the present technology, the transport efficiency of a document of subtitle text information can improve. Alternatively, according to the present technology, region display end processing can be performed properly on the reception side in live delivery. Note that the effects described in the present specification are, but are not limited to, just exemplifications, and thus additional effects may be provided.

### BRIEF DESCRIPTION OF DRAWINGS

Fig. 1 is a block diagram of an exemplary configuration of a transmission and reception system as an embodiment.
Fig. 2 is a block diagram of an exemplary configuration of a stream generation unit of a broadcast output system.
Fig. 3 is a table for describing a TTML structure.
Fig. 4 illustrates tables of an exemplary structure of a subtitle PES packet and an exemplary structure of "PES_data_byte_field()".
Fig. 5 illustrates tables of exemplary definitions of subtitle segment types.
Fig. 6 is a diagram of an exemplary structure of a subtitle stream (PES stream) including subtitle PES packets.
Fig. 7 is a table of an exemplary structure of a TTML-document segment.
Fig. 8 is a table of the descriptions of main information in the exemplary structure of the TTML-document segment.
Fig. 9 is a table of an exemplary structure of a control-command segment.
Fig. 10 is a table of the descriptions of main information in the exemplary structure of the control-command segment.
Fig. 11 is a table of an exemplary structure of a font-download-information segment.
Fig. 12 is a table of the descriptions of main information in the exemplary structure of the font-download-information segment.
Fig. 13 is a chart not according to the claimed invention of an exemplary TTML layer and an exemplary container layer in pre-authored subtitle delivery with fixed samples.
Fig. 14 illustrates schematic tables not according to the claimed invention of the contents of respective TTML documents corresponding to events.
Fig. 15 is a chart not according to the claimed invention of an exemplary TTML layer and an exemplary container layer in live subtitle delivery with fixed samples.
Fig. 16 illustrates schematic tables not according to the claimed invention of the contents of respective TTML documents corresponding to events.
Fig. 17 is a chart not according to the claimed invention of an exemplary TTML layer and an exemplary container layer in pre-authored subtitle delivery with variable samples.
Fig. 18 illustrates schematic tables not according to the claimed invention of the contents of respective TTML documents corresponding to events.
Fig. 19 is a chart according to an embodiment of the claimed invention of a TTML layer and an exemplary container layer in live subtitle delivery with variable samples.
Fig. 20 illustrates schematic tables according to an embodiment of the claimed invention of the contents of respective TTML documents corresponding to events.
Fig. 21 is a chart not according to the claimed invention of an exemplary TTML layer and an exemplary container layer in live subtitle delivery with variable samples.
Fig. 22 illustrates schematic tables not according to the claimed invention of the contents of respective TTML documents corresponding to events.
Fig. 23 is a chart not according to the claimed invention of an exemplary TTML layer and an exemplary container layer in live subtitle delivery with variable samples.
Fig. 24 is a diagram of an exemplary configuration of a transport stream TS.
Fig. 25 is a block diagram of an exemplary configuration of a television receiver.
Fig. 26 is a chart of another exemplary TTML layer and another exemplary container layer in the live subtitle delivery with the fixed samples.

### MODE FOR CARRYING OUT THE INVENTION

A mode for carrying out the invention (hereinafter, referred to as an "embodiment") will be described below. Note that the descriptions will be given in the following order.
1. Embodiment
2. Modification

### <1. Embodiment>

### [Exemplary Configuration of Transmission and Reception System]

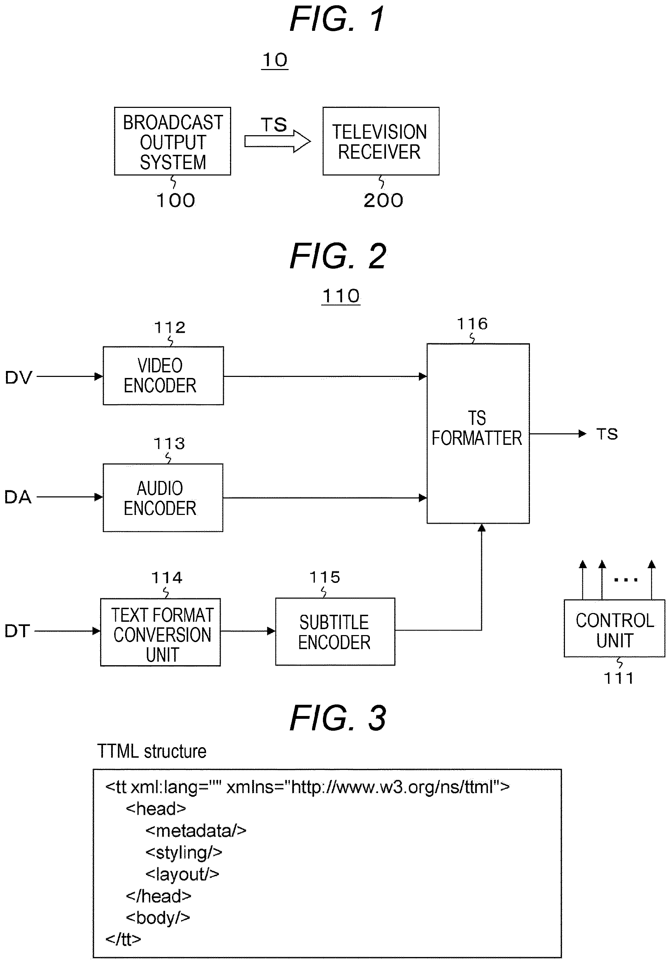

Fig. 1 illustrates an exemplary configuration of a transmission and reception system 10 as an embodiment. The transmission and reception system 10 includes a broadcast output system 100 and a television receiver 200.

The broadcast output system 100 superimposes an MPEG-2 transport stream (hereinafter, simply referred to as a "transport stream") TS as a multiplexed stream, on a broadcast wave, to transmit the transport stream TS.

The transport stream TS has a subtitle stream together with a video stream and an audio stream. The video stream includes video PES packets each having coded image data disposed in a payload. The audio stream includes audio PES packets each having coded audio data disposed in a payload.

The subtitle stream includes subtitle PES packets each having a segment packet disposed in a payload, according to the present embodiment, the segment packet having a document in TTML (TTML document) of subtitle text information having display timing information. Such a subtitle PES packet is generated for every sample.

Here, each sample is, as conventionally known, a fixed sample in which the period thereof is fixed, or each sample is, as newly proposed, a variable sample in which the period thereof is variable in accordance with a variation period of subtitle display. Note that, in the present embodiment, subtitle display corresponding to each sample, is individually referred to as an event.

For the variable samples, the transmission frequency of subtitle PES packets can be inhibited, so that transport efficiency can improve.

For pre-authored subtitle delivery, because region display end time is known, the region display end time can be inserted into a TTML document. However, for live subtitle delivery, because region display end time is unknown at the beginning of a display start, it is impossible that the region display end time is inserted into a TTML document.

In the present embodiment, when the region display end time becomes known, region display-end-time information is given to the reception side with a first method or a second method. This arrangement allows region display end processing on the reception side to be performed properly on the reception side in live delivery.

In the first method, a PES packet having a segment packet having a TTML document in which region end-time information is filled, inserted in a payload, is newly generated and is transmitted. The first method is limited to, for the fixed samples, a sample unit thereof. In the second method, a PES packet having a segment packet having a control command for giving region display-end-time information, inserted in a payload, is newly generated and is transmitted.

The television receiver 200 receives the transport stream TS sent by the broadcast wave from the broadcast output system 100. The transport stream TS has, as described above, the subtitle stream together with the video stream and the audio stream. The subtitle stream includes, as described above, the subtitle PES packets each having a segment packet having a TTML document, disposed in a payload.

The television receiver 200 receives, in accordance with each sample, a subtitle PES packet for the sample before the beginning of the period of the sample. The television receiver 200 controls region display on the basis of the TTML document included in the subtitle PES packet. In a case where each sample is a variable sample, the television receiver 200 has the reception frequency of PES packets lower than that in a case where each sample is a fixed sample, so that a processing load is reduced.

For the live subtitle delivery, with the first method adopted, the television receiver 200 controls an end of the region display, on the basis of the TTML document in which region display-end-time information is filled, included in a subtitle PES packet received after the region display starts. Furthermore, in a similar case, with the second method adopted, the television receiver 200 acquires the region display-end-time information and controls an end of the region display, on the basis of the control command for giving region display-end-time information, included in a subtitle PES packet received after the region display starts. This arrangement allows the television receiver 200 to perform the region display end processing properly in the live delivery.

### [Exemplary Configuration of Stream Generation Unit of Broadcast Output System]

Fig. 2 illustrates an exemplary configuration of a stream generation unit 110 of the broadcast output system 100. The stream generation unit 110 has a control unit 111, a video encoder 112, an audio encoder 113, a text format conversion unit 114, a subtitle encoder 115, and a TS formatter (multiplexer) 116.

The control unit 111 includes, for example, a central processing unit (CPU), and controls the operation of each unit of the stream generation unit 110. The video encoder 112 inputs image data DV and performs coding to the image data DV, to generate a video stream (PES stream) including video PES packets each having coded image data in a payload. The audio encoder 113 inputs audio data DA and performs coding to the audio data DA, to generate an audio stream (PES stream) including audio PES packets each having coded audio data.

The text format conversion unit 114 inputs text data (character code) DT as subtitle information, and acquires subtitle text information having display timing information, in a predetermined format. For example, TTML or a TTML derived format is considered as the text information, but TTML is adopted in the present embodiment.

Fig. 3 illustrates an exemplary structure of a document (file) in TTML. The TTML is described on an XML basis. Head and body are present in the TTML. Then, for example, metadata, styling, and layout are present in the head.

The metadata includes, for example, title information and copyright information. For example, a region identifier, and color information, font information, and position information in association with the region identifier are disposed in the styling. For example, background color information and alignment information are disposed in association with the region identifier in the layout. For example, subtitle text data to be displayed and timing information regarding a region display start and a region display end are disposed in association with the region identifier in the body.

Referring back to Fig. 2, the subtitle encoder 115 generates a segment packet including a document in TTML acquired by the text format conversion unit 114 (timed text subtitling segment: TT subtitling segment). Then, the subtitle encoder 115 generates a subtitle stream (PES stream) including a subtitle PES packet having the segment packet disposed in a payload.

The subtitle encoder 115 generates a subtitle PES packet for every sample. Furthermore, because the region display end time is unknown initially for the live subtitle delivery, the subtitle encoder 115 cannot insert the region display end time into the TTML document included in a subtitle PES packet, and thus renders a blank.

Thereafter, when the region display end time becomes known, the subtitle encoder 115 generates a new subtitle PES packet in order to give the region display-end-time information to the reception side. With the first method adopted, the subtitle encoder 115 generates a segment packet including a TTML document in which the region end-time information is filled, and newly generates a subtitle PES packet having the segment packet disposed in a payload. With the second method adopted, the subtitle encoder 115 generates a segment packet including a control command for giving the region display-end-time information, and newly generates a subtitle PES packet having the segment packet disposed in a payload.

Furthermore, the subtitle encoder 115 generates a segment packet including download information for downloading a font file designated in TTML font designation information, and disposes the segment packet in the payload of the PES packet.

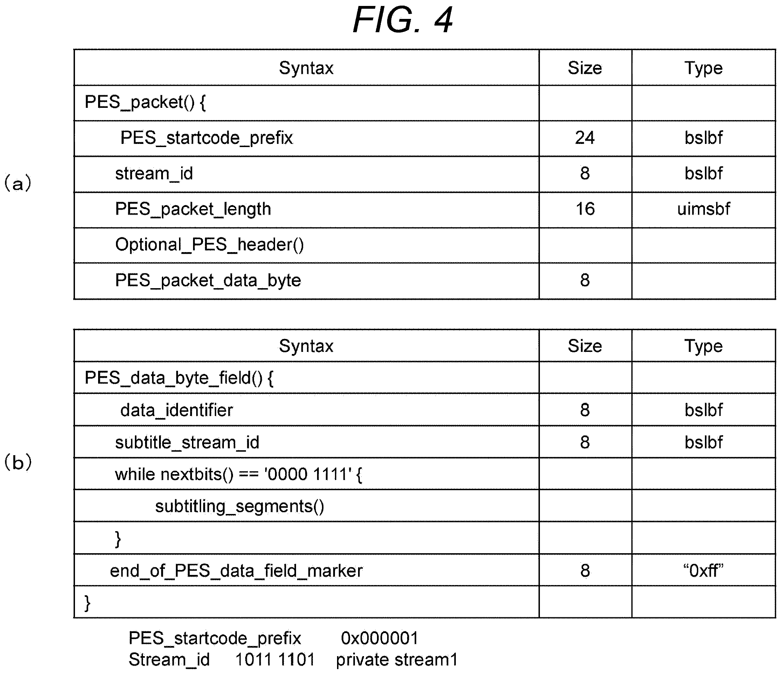

Fig. 4(a) illustrates an exemplary structure of a subtitle PES packet (PES_packet). A fixed pattern of "0x000001" is disposed in the 24-bit field of "PES_startcode_prefix". The 8-bit field of "stream_id" indicates a stream identifier. For the subtitle PES packet, "10111101" that is a value indicating "private stream1", is provided. The 16-bit field of "PES_packet_length" indicates a byte length thereafter as the length (size) of the PES packet.

The field of "Optional_PES_header()" is present after "PES_packet_length". For example, the time stamp of PTS or DTS is disposed in the field. After the field, the field of "PES_packet_data_byte" is present. The field corresponds to a PES payload. "PES_data_byte_field()" for containing data is disposed in the field.

Fig. 4(b) illustrates an exemplary structure of "PES_data_byte_field()". The 8-bit field of "data_identifier" indicates an identifier that identifies the type of data in a container portion. Because conventional subtitles (in bitmap) are indicated with "0x20", identification of text can be made with a new value, for example, "0x21".

The 8-bit field of "subtitle_stream_id" indicates an identifier that identifies the type of a subtitle stream. A new value, for example, "0x01" is adopted for the subtitle stream that transports text information, so that a distinction can be made from the subtitle stream "0x00" that transports the conventional bitmap.

After the field of "subtitle_stream_id", the field of "Subtitling_segments()" is present, following a pattern of "00001111". A segment packet is disposed in the field. After the field, the 8-bit field of "end_of_PES_data_field_marker" is present. The field is a marker indicating the end of the PES packet.

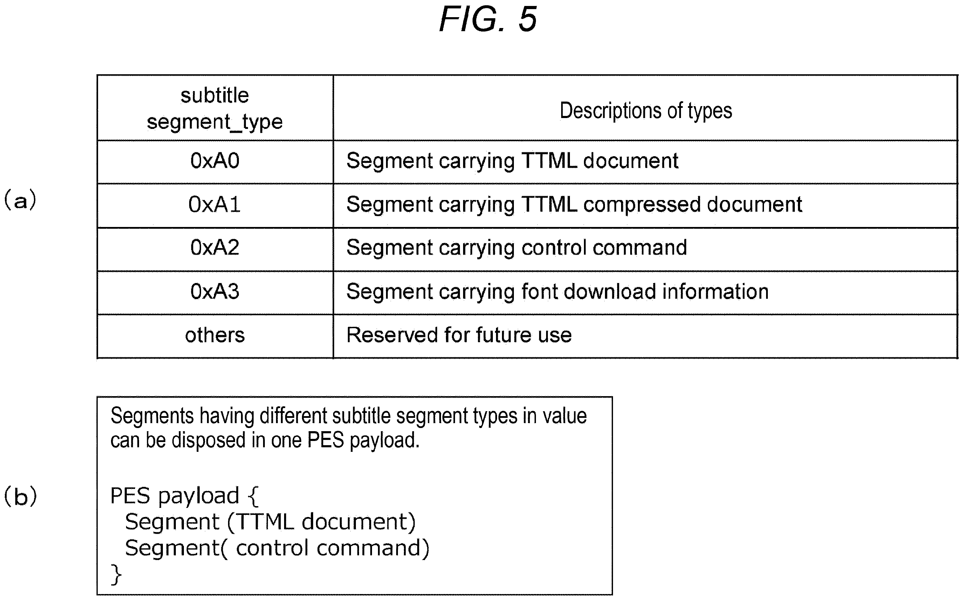

Fig. 5(a) illustrates exemplary definitions of subtitle segment types (subtitle segment_type). "0xA0" indicates a segment packet that transports a TTML document. "0xA1" indicates a segment packet that transports a compressed TTML document. "0xA2" indicates a segment packet that transports a control command. "0xA3" indicates a segment packet that transports font download information. As illustrated in Fig. 5(b), segments having different subtitle segment types in value, can be disposed in one PES payload.

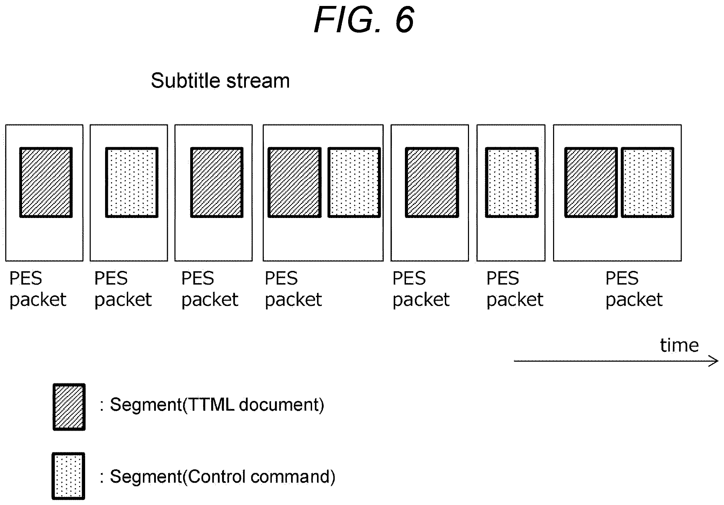

Fig. 6 illustrates an exemplary structure of a subtitle stream (PES stream) including subtitle PES packets. In the example, as the subtitle PES packets, for example, a subtitle PES packet including only a segment packet that transports a TTML document, a subtitle PES packet including only a segment packet that transports a control command, and furthermore a subtitle PES packet including both thereof are present.

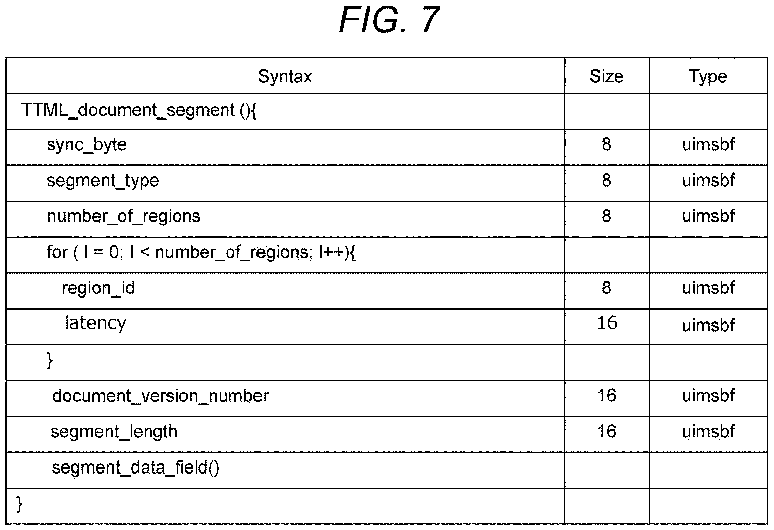

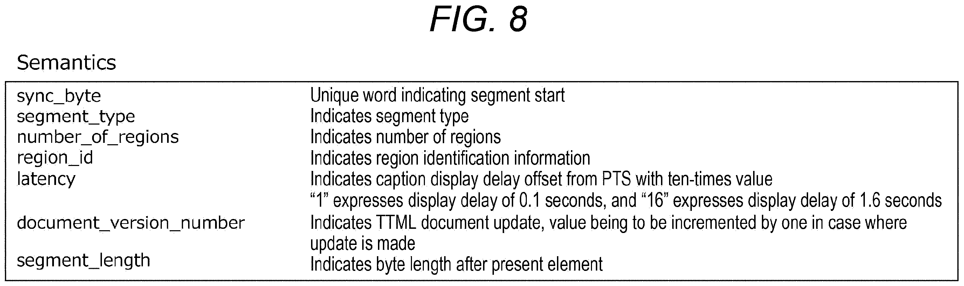

An exemplary structure of a segment packet will be described. Fig. 7 illustrates an exemplary structure of a TTML-document segment (TTL_document_segment()). Fig. 8 illustrates the descriptions of main information in the exemplary structure. The 8-bit field of "sync_byte" is a unique word indicating a segment start. The 8-bit field of "segment_type" is a segment type, and indicates the type of the segment. For the TTML-document segment, "segment_type" is "0xA0" (refer to Fig. 5(a)).

The 8-bit field of "number_of_regions" indicates the number of regions included in a TTML document. The 8-bit field of "region_id" is repeatedly present by the number of regions. The field of "region_id" indicates region identification information (id). The region identification information (id) corresponds to the region identification information (id) in the TTML document.

The 16-bit field of "latency" indicates the delay in time from PTS until caption display (subtitle display) transported in byte data of "segment_data_field()" starts. The value is, for example, ten times the amount of actual time (by the second). The 16-bit field of "document_version_number" indicates information update of the TTML document. In a case where an update is made, the value is incremented by one.

The 16-bit field of "segment_length" indicates a byte length thereafter as the length (size) of the TTML-document segment. After "segment_length", the field of "segment_data_field()" is present. The field corresponds to the payload of the segment (segment packet), and the entire TTML document is disposed in the field.

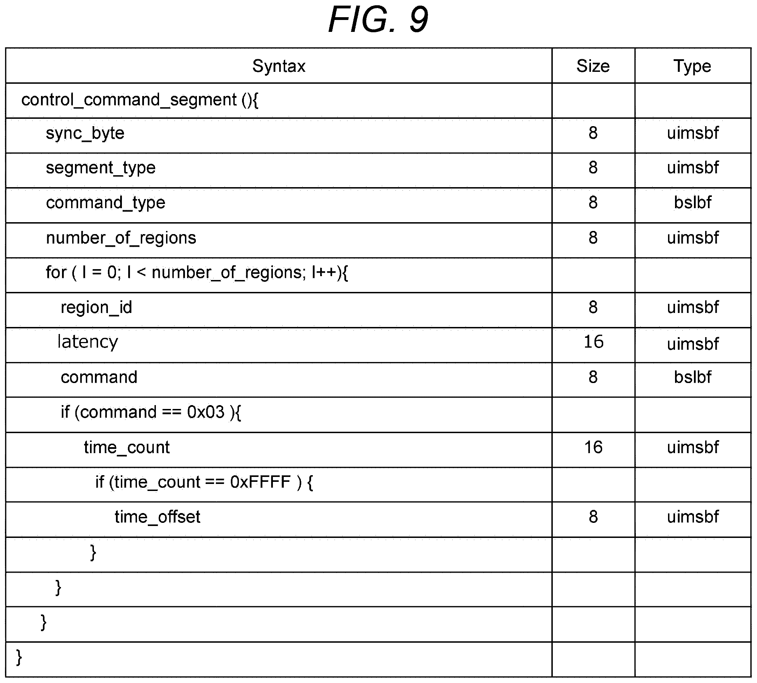

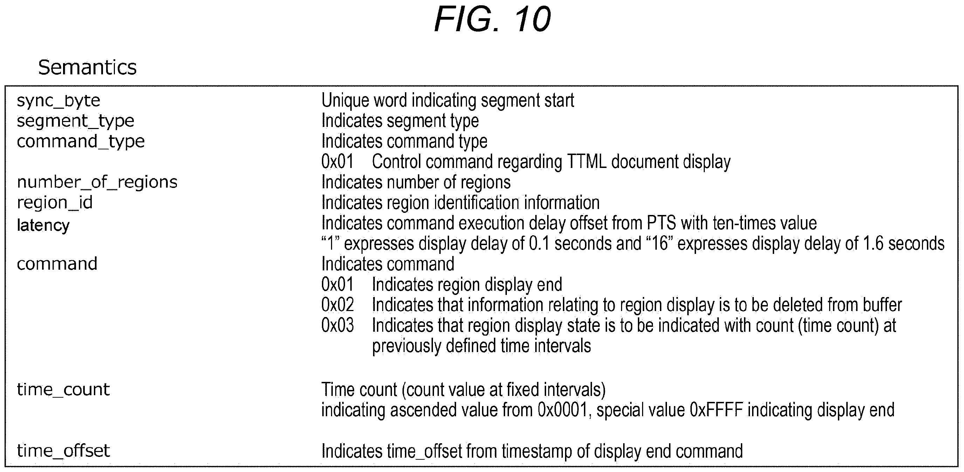

Fig. 9 illustrates an exemplary structure of a control-command segment (control_command_segment()). Fig. 10 illustrates the descriptions of main information in the exemplary structure. The 8-bit field of "sync_byte" is a unique word indicating a segment start. The 8-bit field of "segment_type" is a segment type, and indicates the type of the segment. For the control-command segment, "segment_type" is "0xA2" (refer to Fig. 5(a)).

The 8-bit field of "number_of_regions" indicates the number of regions. The 8-bit field of "region_id" and the 8-bit field of "command" are repeatedly present by the number of regions. The field of "region_id" indicates region identification information (id). The field of "latency" expresses the timing of command execution as a delay offset from PTS. The value is indicated with a tenfold value, and thus "1" and "16" express an execution delay of 0.1 seconds and an execution delay of 1.6 seconds, respectively. The field of "command" indicates a command. For example, "0x01" indicates an end of region display. "0x02" indicates that information relating to the region display is to be deleted from a buffer. "0x03" indicates that a region display state is to be indicated with a count (time count) at previously defined time intervals.

When "command" is "0x03", the 16-bit field of "time count" is present. The field of "time count" indicates a time count (count value at fixed intervals). The time count is an ascended value from "0x0001", and a special value "0xFFFF" indicates a display end. The 8-bit field of "time_offset" indicates a time offset (time_offset) from the time stamp (timestamp) of a display end command.

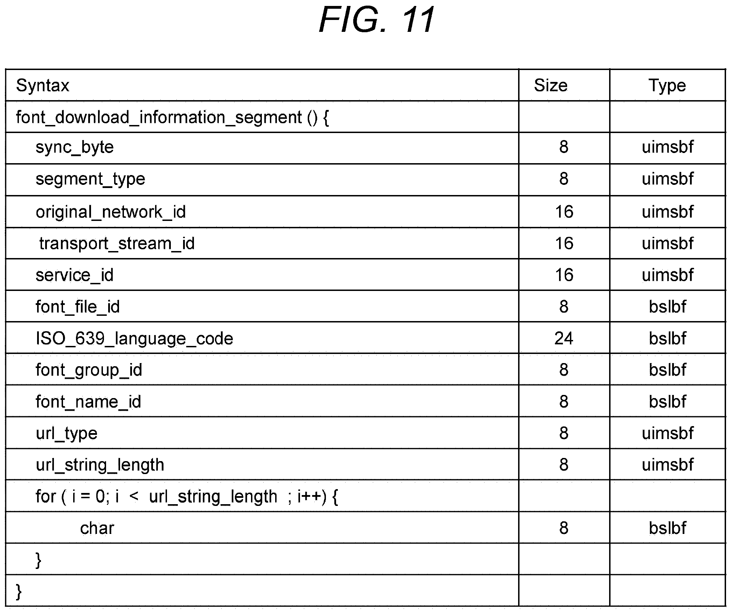

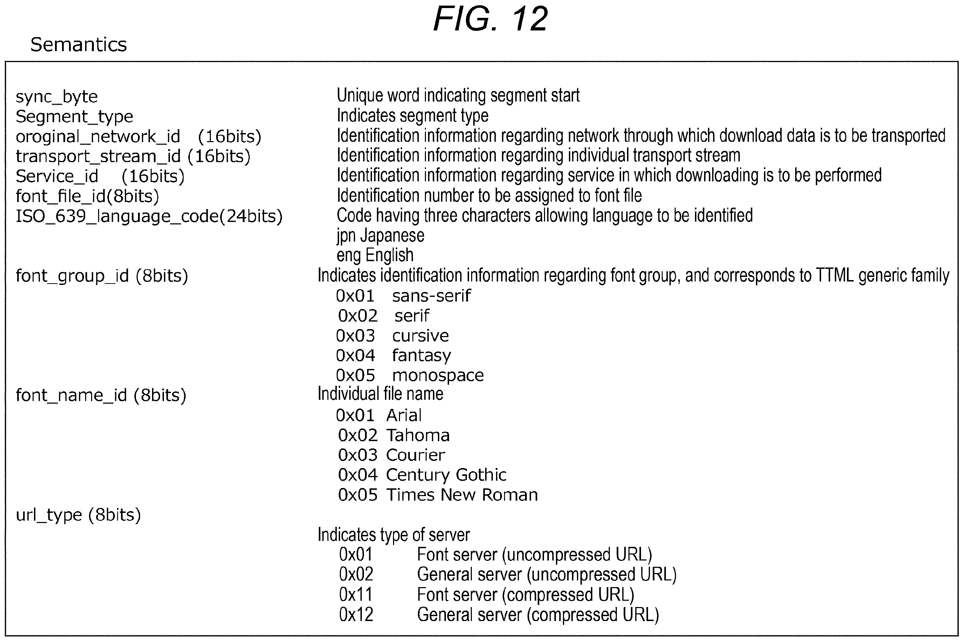

Fig. 11 illustrates an exemplary structure of a font-download-information segment (font_download_information_segment()). Fig. 12 illustrates the descriptions of main information in the exemplary structure. The 8-bit field of "sync_byte" is a unique word indicating a segment start. The 8-bit field of "segment_type" is a segment type, and indicates the type of the segment. For the control-command segment, "segment_type" is "0xA3" (refer to Fig. 5(a)).

The 16-bit field of "original_network_id" indicates identification information regarding a network through which download data is to be transported. The 16-bit field of "transport_stream_id" indicates identification information regarding an individual transport stream. The 16-bit field of "service_id" indicates identification information regarding a service in which downloading is to be performed. For a common object to be downloaded between delivery media, there is a possibility that, instead of in the host transport stream, a font file is sent in another transport stream. In that case, information regarding "original_network_id", "transport_stream_id", and "service_id" can be designated as information for specifying a private section in a reference destination.

The 8-bit field of "font_file_id" indicates an identification number assigned to the font file. The 24-bit field of "ISO_639_language_code" indicates a code having three characters allowing a language to be identified. For example, "jpn" indicates Japanese, and "eng" indicates English. The 8-bit field of "font_group_id" indicates identification information regarding a font group, and corresponds to a TTML generic family. The 8-bit field of "font_name_id" indicates an individual font name.

The 8-bit field of "url_type" indicates the type of a server. For example, "0x01" indicates a font server (uncompressed URL) and "0x02" indicates a general server (uncompressed URL). "0x11" indicates a font server (compressed URL) and "0x12" indicates a general server (compressed URL). The 8-bit field of "url_string_length" indicates, in byte length, the length (size) of a character code portion indicating the character string of a URL, thereafter. The character code is disposed in the field of "char".

### <TTML Layer and Container Layer>

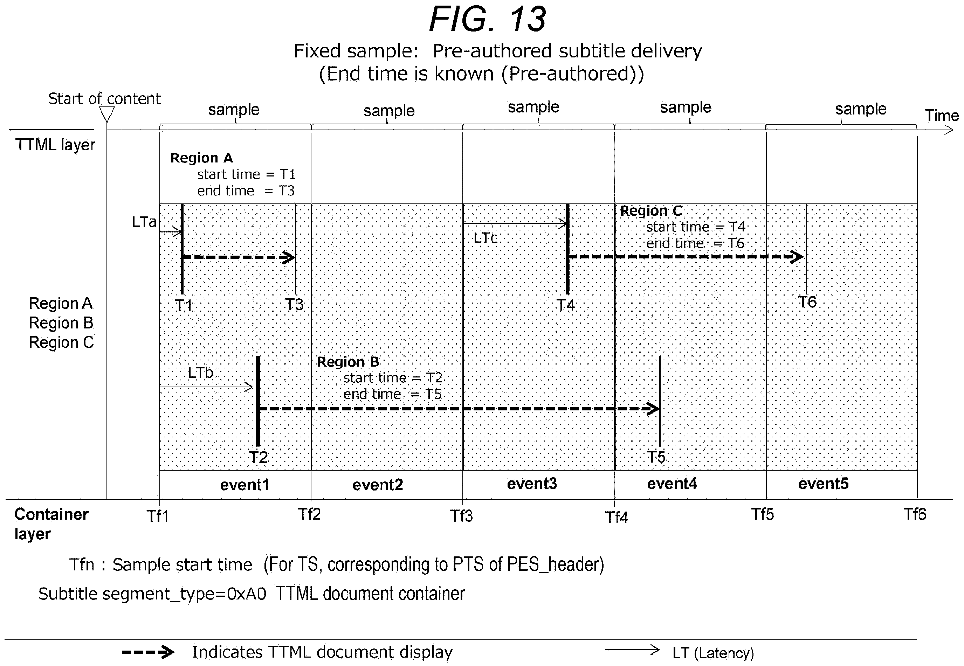

Here, a TTML layer and a container layer will be further described. First, subtitle delivery produced at expense in time, namely, pre-authored subtitle delivery will be described with fixed samples. Fig. 13 illustrates an exemplary TTML layer and an exemplary container layer in that case.

Information regarding a region A is present in the TTML layer. The region A is displayed from timing T1 to timing T3. In other words, regarding the region A, a start time "start time" corresponding to the point in time past by a delay LTa from Tf1 in which PTS is reflected, is T1 and an end time "end time" is T3. Because of the pre-authored subtitle delivery here, T3 is previously known. Thus, the fact that the end time "end time" is T3 is initially written in a TTML document in addition to the fact that "start time" is T1, in relation to the region A.

Furthermore, information regarding a region B is present in the TTML layer. The region B is displayed from timing T2 to timing T5, partially overlapping with the region A described above, temporally. In other words, regarding the region B, a start time "start time" corresponding to the point in time past by a delay LTb from Tf1 in which PTS is reflected, is T2 and an end time "end time" is T5. Because of the pre-authored subtitle delivery here, T5 is previously known. Thus, the fact that the end time "end time" is T5 is initially written in a TTML document in addition to the fact that "start time" is T2, in relation to the region B.

Moreover, information regarding a region C is present in the TTML layer. The region C is displayed from timing T4 to timing T6, partially overlapping with the region B described above, temporally. In other words, regarding the region C, a start time "start time" corresponding to the point in time past by a delay LTc from Tf3 in which PTS is reflected, is T4 and an end time "end time" is T6. Because of the pre-authored subtitle delivery here, T6 is previously known. Thus, the fact that the end time "end time" is T6 is initially written in a TTML document in addition to the fact that "start time" is T4, in relation to the region C.

Here, an event is provided for every sample. In accordance with each event, a PES packet (container packet) having a segment packet of a TTML document (subtitle segment_type = 0xA0) including region information regarding the event, disposed in a payload, is generated and is transmitted. In this case, the value of presentation time stamp (PTS) to be inserted into the header of each PES packet, is the start time of the corresponding sample (Sample start time).

Then, each PES packet is transmitted so as to arrive at the reception side at the latest before the start time of the corresponding sample. For example, a PES packet having a segment packet of a TTML document including the region information regarding an event 1, disposed in a payload, is transmitted so as to arrive at the reception side before time Tf1. Furthermore, for example, a PES packet having a segment packet of a TTML document including the region information regarding an event 2, disposed in a payload, is transmitted so as to arrive at the reception side before time Tf2. A similar manner is made for the others.

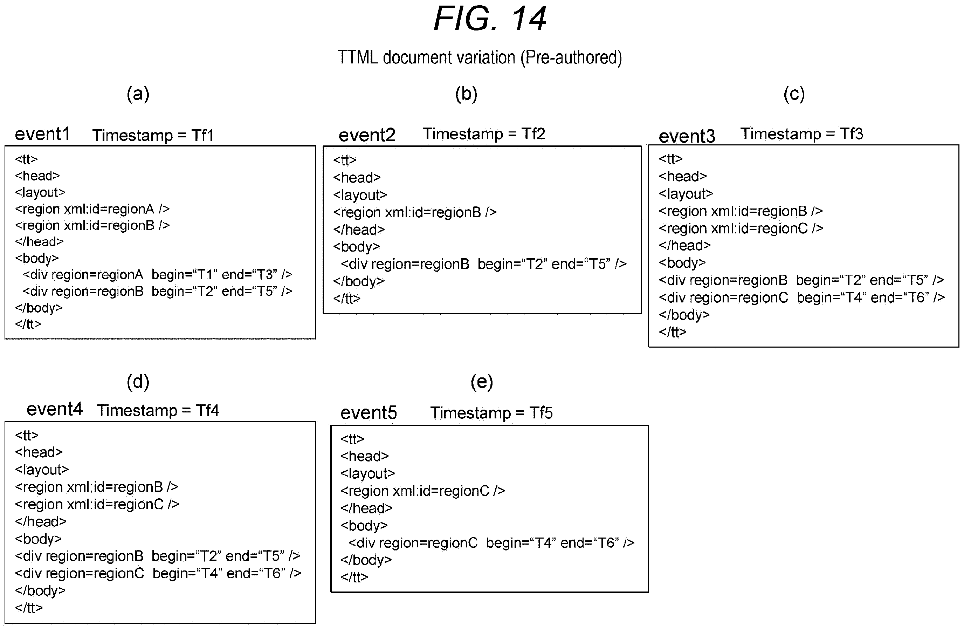

Figs. 14(a) to 14(e) schematically illustrate the contents of the respective TTML documents corresponding to the events. Fig. 14(a) illustrates the TTML document corresponding to the event 1. The TTML document includes the information regarding the region B together with the information regarding the region A. In this case, the start time and the end time of the region A are rendered in "begin="T1"end="T3"", and the start time and the end time of the region B are rendered in "begin="T2"end="T5"".

Fig. 14(b) illustrates the TTML document corresponding to the event 2. The TTML document includes only the information regarding the region B. In this case, the start time and the end time of the region B are rendered in "begin="T2"end="T5"".

Fig. 14(c) illustrates the TTML document corresponding to an event 3. The TTML document includes the information regarding the region C together with the information regarding the region B. In this case, the start time and the end time of the region B are rendered in "begin="T2"end="T5"", and the start time and the end time of the region C are rendered in "begin="T4"end="T6"".

Fig. 14(d) illustrates the TTML document corresponding to an event 4. The TTML document includes the information regarding the region C together with the information regarding the region B. In this case, the start time and the end time of the region B are rendered in "begin="T2"end="T5"", and the start time and the end time of the region C are rendered in "begin="T4"end="T6"".

Fig. 14(e) illustrates the TTML document corresponding to an event 5. The TTML document includes only the information regarding the region C. In this case, the start time and the end time of the region C are rendered in "begin="T4"end="T6"".

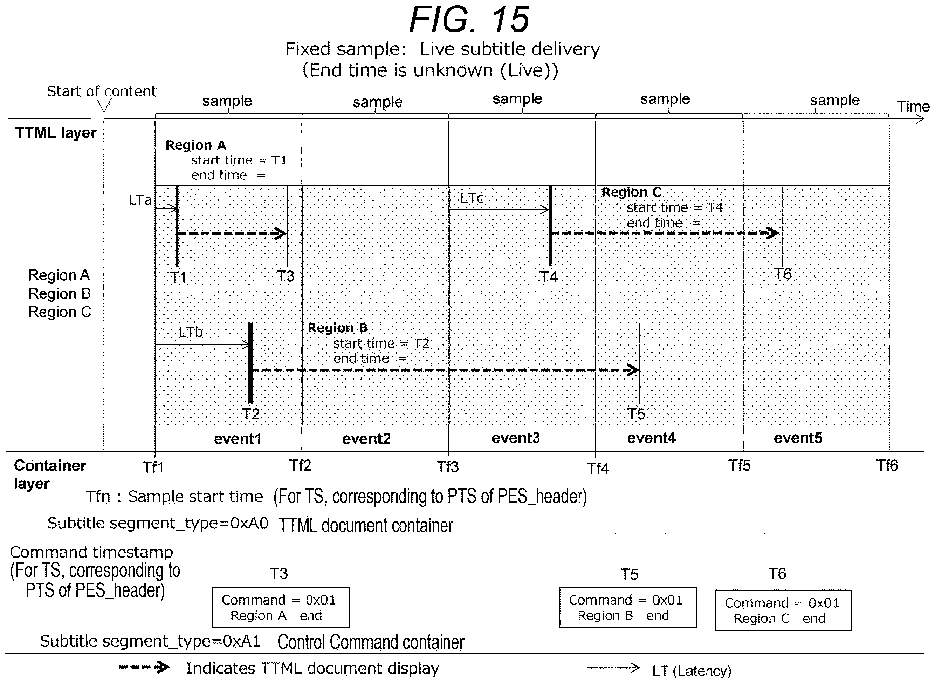

Next, live subtitle delivery with fixed samples will be described. Fig. 15 illustrates an exemplary TTML layer and an exemplary container layer in that case.

Information regarding a region A is present in the TTML layer. The region A is displayed from timing T1 to timing T3 at the end, but T3 cannot get previously known. Therefore, initially, only the fact that "start time" is T1 is written and a blank is rendered for an end time "end time" in a TTML document, in relation to the region A. Note that T1 corresponds to the point in time past by a delay LTa from Tf1 in which PTS is reflected.

Furthermore, information regarding a region B is present in the TTML layer. The region B is displayed from timing T2 to timing T5 at the end, partially overlapping with the region A described above, temporally, but T5 cannot get previously known. Therefore, initially, only the fact that "start time" is T2 is written and a blank is rendered for an end time "end time" in a TTML document, in relation to the region B. Note that T2 corresponds to the point in time past by a delay Ltb from Tf1 in which PTS is reflected.

Moreover, information regarding a region C is present in the TTML layer. The region C is displayed from timing T4 to timing T6 at the end, partially overlapping with the region B described above, temporally, but T6 cannot get previously known. Therefore, initially, only the fact that "start time" is T4 is written and a blank is rendered for an end time "end time" in a TTML document, in relation to the region C. Note that T4 corresponds to the point in time past by a delay LTc from Tf3 in which PTS is reflected.

Here, an event is provided for every sample. In accordance with each event, a PES packet (container packet) having a segment packet of a TTML document (subtitle segment_type = 0xA0) including region information regarding the event, disposed in a payload, is generated and is transmitted. In this case, the value of presentation time stamp (PTS) to be inserted into the header of each PES packet, is the start time of the corresponding sample (Sample start time).

Then, each PES packet is generated and is transmitted so as to arrive at the reception side at least at the start time of the corresponding sample. For example, a PES packet having a segment packet of a TTML document including the region information regarding an event 1, disposed in a payload, is transmitted so as to arrive at the reception side before time Tf1. Furthermore, for example, a PES packet having a segment packet of a TTML document including the region information regarding an event 2, disposed in a payload, is transmitted so as to arrive at the reception side before time Tf2. A similar manner is made for the others.

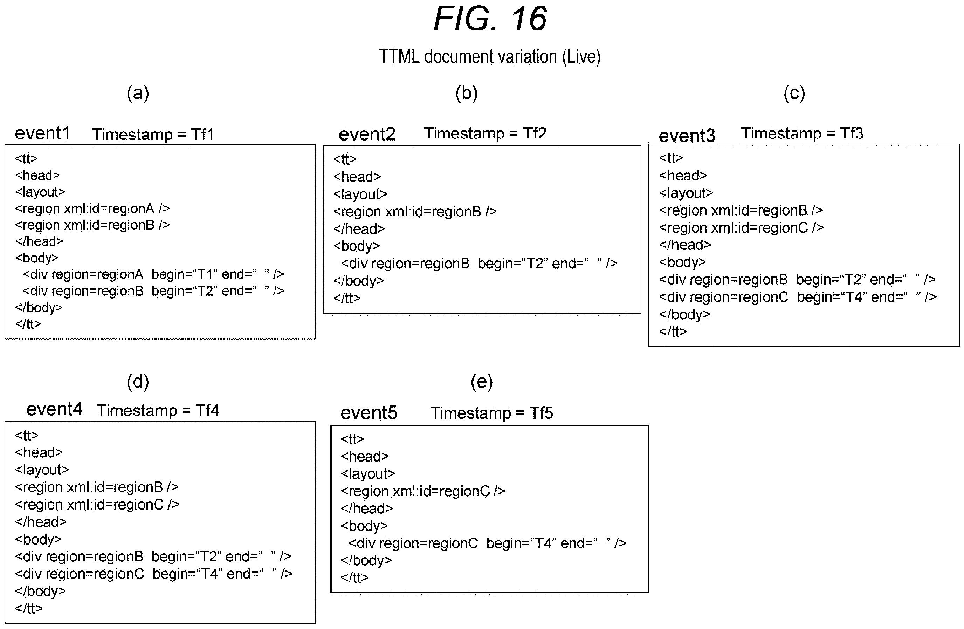

Figs. 16(a) to 16(e) schematically illustrate the contents of the respective TTML documents corresponding to the events. Fig. 16(a) illustrates the TTML document corresponding to the event 1. The TTML document includes the information regarding the region B together with the information regarding the region A. In this case, the start time and the end time of the region A are rendered in "begin="T1"end=" "", and the start time and the end time of the region B are rendered in "begin="T2"end=" "".

Fig. 16(b) illustrates the TTML document corresponding to the event 2. The TTML document includes only the information regarding the region B. In this case, the start time and the end time of the region B are rendered in "begin="T2"end=" "".

Fig. 16(c) illustrates the TTML document corresponding to an event 3. The TTML document includes the information regarding the region C together with the information regarding the region B. In this case, the start time and the end time of the region B are rendered in "begin="T2"end=" "", and the start time and the end time of the region C are rendered in "begin="T4"end=" "".

Fig. 16(d) illustrates the TTML document corresponding to an event 4. The TTML document includes the information regarding the region C together with the information regarding the region B. In this case, the start time and the end time of the region B are rendered in "begin="T2"end=" "", and the start time and the end time of the region C are rendered in "begin="T4"end=" "".

Fig. 16(e) illustrates the TTML document corresponding to an event 5. The TTML document includes only the information regarding the region C. In this case, the start time and the end time of the region C are rendered in "begin="T4"end=" "".

Here, in a case where the display end times of the regions A, B, and C get known, it is considered that a PES packet having a segment packet of a TTML document in which region display-end-time information is filled, disposed in a payload, is generated and is transmitted to give (clearly indicate) the region display-end-time information to the reception side. However, because a sample period is fixed, timing at which a PES packet having a TTML document in which region display-end-time information is filled is generated and is transmitted in this manner, is limited. Thus, for example, TTML "end time" corresponding to a "latency" amount from PTS in a packet transporting a fixed sample, is updated to give a clear indication. In a case where a relatively long sample period is provided, there is a possibility that "end time" is difficult to estimate.

In some cases, transmitting a TTML document in which region display-end-time information is filled, in this manner, has difficulty in giving the region display-end-time information to the reception side. For example, regarding the region A, even when the end time T3 gets known after the timing Tf1, a TTML document in which region display-end-time information is filled, cannot be transmitted before the time T3. A similar situation occurs regarding the regions B and C.

Thus, in a case where the end times of the regions A, B, and C get known in the example, a PES packet having a segment packet of a control command for giving region display-end-time information (command=0x01) (subtitle segment_type = 0xA2), disposed in a payload, is generated and is transmitted so as to arrive at the reception side before each of the times. In this case, the value of presentation time stamp (PTS) to be inserted into the header of the PES packet, indicates the region display end time. Accordingly, in this case, the region display end time is given with PTS.

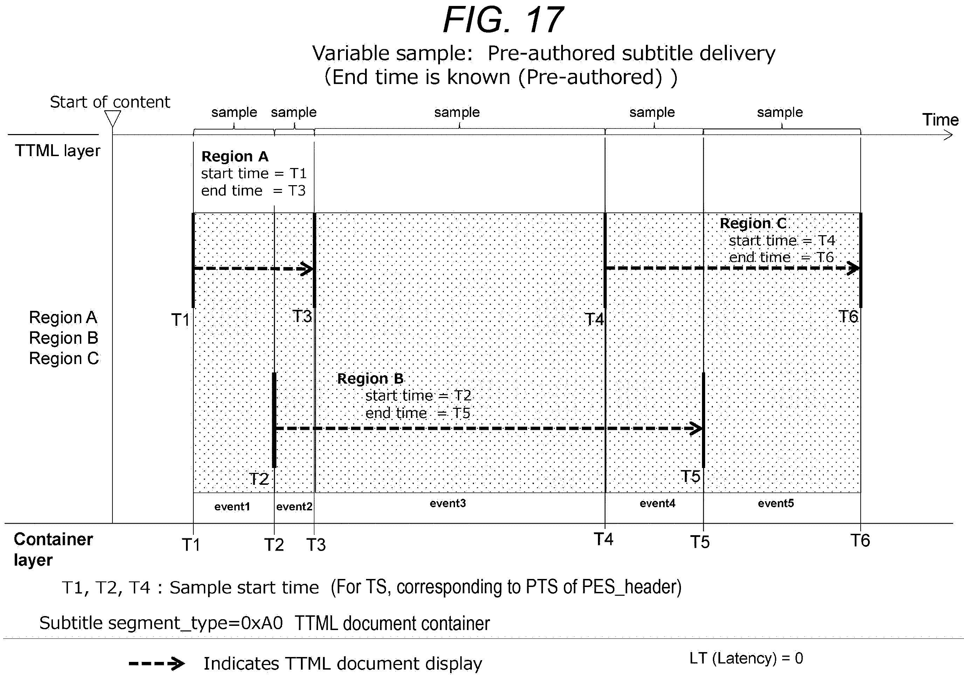

Next, pre-authored subtitle delivery with variable samples will be described. Fig. 17 illustrates an exemplary TTML layer and an exemplary container layer in that case.

Information regarding a region A is present in the TTML layer. The region A is displayed from timing T1 to timing T3. In other words, regarding the region A, a start time "start time" is T1, and an end time "end time" is T3. Because of the pre-authored subtitle delivery here, T3 is previously known. Thus, the fact that the end time "end time" is T3 is initially written in a TTML document in addition to the fact that "start time" is T1, in relation to the region A.

Furthermore, information regarding a region B is present in the TTML layer. The region B is displayed from timing T2 to timing T5, partially overlapping with the region A described above, temporally. In other words, regarding the region B, a start time "start time" is T2 and an end time "end time" is T5. Because of the pre-authored subtitle delivery here, T5 is previously known. Thus, the fact that the end time "end time" is T5 is initially written in a TTML document in addition to the fact that "start time" is T2, in relation to the region B.

Moreover, information regarding a region C is present in the TTML layer. The region C is displayed from timing T4 to timing T6, partially overlapping with the region B described above, temporally. In other words, regarding the region C, a start time "start time" is 42 and an end time "end time" is T6. Because of the pre-authored subtitle delivery here, T6 is previously known. Thus, the fact that the end time "end time" is T6 is initially written in a TTML document in addition to the fact that "start time" is T4, in relation to the region C.

For each variable sample, as described above, the period thereof varies in accordance with a variation period of subtitle display (display of each region). Therefore, as illustrated in Fig. 17, from T1 to T2, from T2 to T3, from T3 to T4, from T4 to T5, and from T5 to T6 each are defined as one sample.

Here, an event is provided for every sample. Accordingly, an event 1 includes the sample of from T1 to T2, an event 2 includes the sample of from T2 to T3, an event 3 includes the sample of from T3 to T4, an event 4 includes the sample of from T4 to T5, and an event 5 includes the sample of from T5 to T6.

In accordance with each event, a PES packet (container packet) having a segment packet of a TTML document (subtitle segment_type = 0xA0) including region information regarding the event, disposed in a payload, is generated and is transmitted. In this case, the value of presentation time stamp (PTS) to be inserted into the header of each PES packet, is the start time of the corresponding sample (Sample start time).

Then, each PES packet is transmitted so as to arrive at the reception side at the latest before the start time of the corresponding sample. For example, a PES packet having a segment packet of a TTML document including the region information regarding the event 1, disposed in a payload, is transmitted so as to arrive at the reception side before the time T1. Furthermore, for example, a PES packet having a segment packet of a TTML document including the region information regarding the event 2, disposed in a payload, is transmitted so as to arrive at the reception side before the time T2. A similar manner is made for the others.

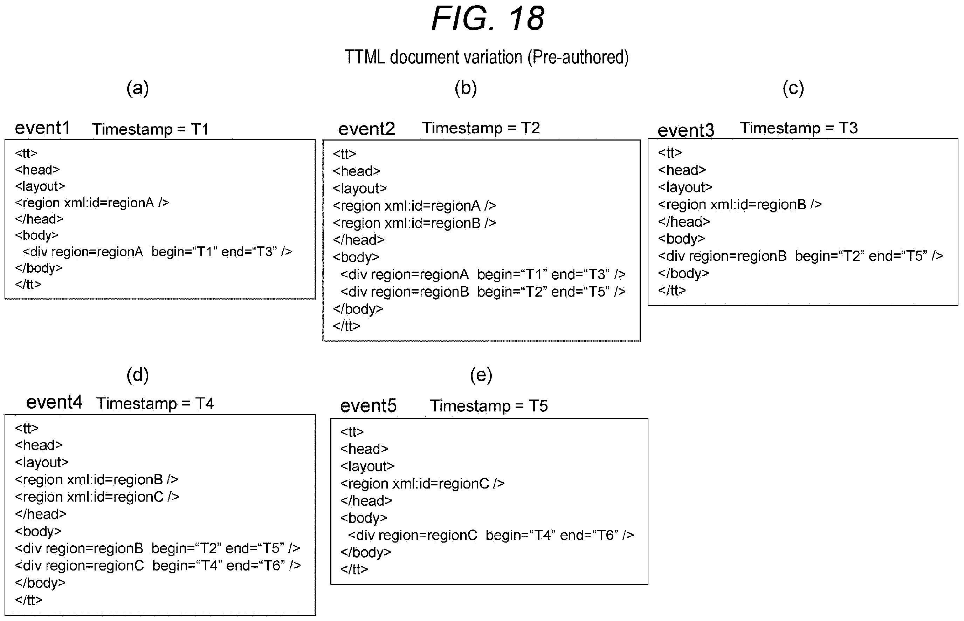

Figs. 18(a) to 18(e) schematically illustrate the contents of the respective TTML documents corresponding to the events. Fig. 18(a) illustrates the TTML document corresponding to the event 1. The TTML document includes only the information regarding the region A. In this case, the start time and the end time of the region A are rendered in "begin="T1"end="T3"".

Fig. 18(b) illustrates the TTML document corresponding to the event 2. The TTML document includes the information regarding the region B together with the information regarding the region A. In this case, the start time and the end time of the region A are rendered in "begin="T1"end="T3"", and the start time and the end time of the region B are rendered in "begin="T2"end="T5"".

Fig. 18(c) illustrates the TTML document corresponding to the event 3. The TTML document includes only the information regarding the region B. In this case, the start time and the end time of the region B are rendered in "begin="T2"end="T5"".

Fig. 18(d) illustrates the TTML document corresponding to the event 4. The TTML document includes the information regarding the region C together with the information regarding the region B. In this case, the start time and the end time of the region B are rendered in "begin="T2"end="T5"", and the start time and the end time of the region C are rendered in "begin="T4"end="T6"".

Fig. 18(e) illustrates the TTML document corresponding to the event 5. The TTML document includes only the information regarding the region C. In this case, the start time and the end time of the region C are rendered in "begin="T4"end="T6"".

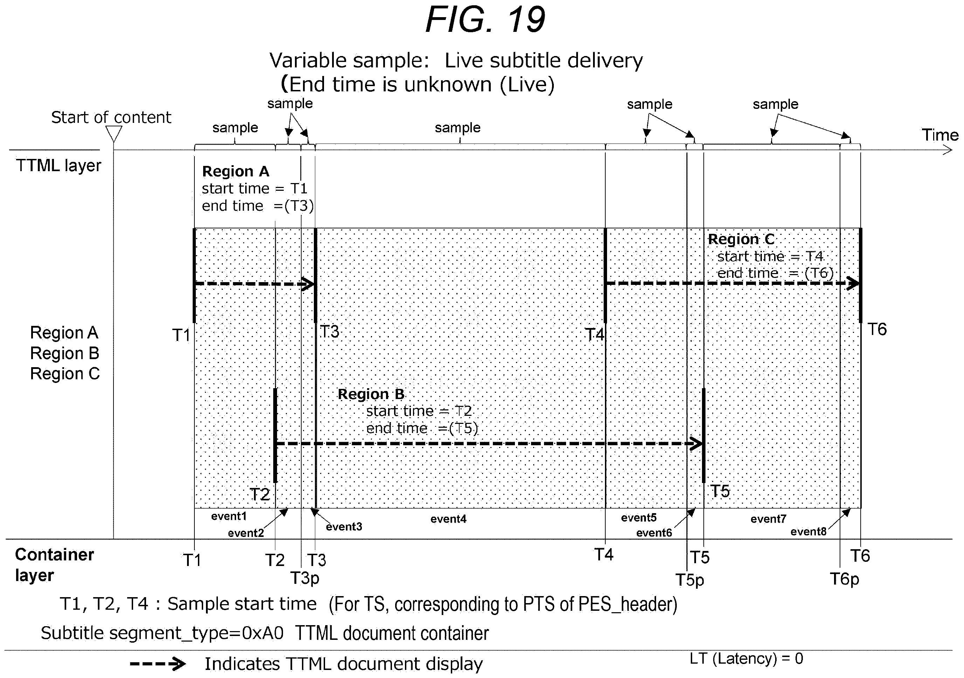

Next, live subtitle delivery with variable samples will be described. Fig. 19 illustrates a TTML layer and a container layer in that case according to an embodiment of the claimed invention.

Information regarding a region A is present in the TTML layer. The region A is displayed from timing T1 to timing T3 at the end, but T3 cannot get previously known. Therefore, initially, only the fact that "start time" is T1 is written and a blank is rendered for an end time "end time" in a TTML document, in relation to the region A.

Furthermore, information regarding a region B is present in the TTML layer. The region B is displayed from timing T2 to timing T5 at the end, partially overlapping with the region A described above, temporally, but T5 cannot get previously known. Therefore, initially, only the fact that "start time" is T2 is written and a blank is rendered for an end time "end time" in a TTML document, in relation to the region B.

Moreover, information regarding a region C is present in the TTML layer. The region C is displayed from timing T4 to timing T6 at the end, partially overlapping with the region B described above, temporally, but T6 cannot get previously known. Therefore, initially, only the fact that "start time" is T4 is written and a blank is rendered for an end time "end time" in a TTML document, in relation to the region C.

Here, an event is provided for every sample. In accordance with each event, a PES packet (container packet) having a segment packet of a TTML document (subtitle segment_type = 0xA0) including region information regarding the event, disposed in a payload, is generated and is transmitted. In this case, the value of presentation time stamp (PTS) to be inserted into the header of each PES packet, is the start time of the corresponding sample (Sample start time).

Each PES packet is generated and is transmitted so as to arrive at the reception side at the latest before the start time of the corresponding sample. For example, a PES packet having a segment packet of a TTML document including the region information regarding an event 1, disposed in a payload, is transmitted so as to arrive at the reception side before time Tf1. Furthermore, for example, a PES packet having a segment packet of a TTML document including the region information regarding an event 2, disposed in a payload, is transmitted so as to arrive at the reception side before time Tf2. A similar manner is made for the others.

In a case where the display end times of the regions A, B, and C get known with the variable samples in the example, a PES packet having a segment packet of a TTML document in which region display-end-time information is filled, disposed in a payload, is generated and is transmitted. That is, in a case where the display end times of the regions A, B, and C get known, the TTML document is updated.

In this case, as illustrated in Fig. 19, from T1 to T2, from T2 to T3p, from T3p to T3, from T3 to T4, from T4 to T5p, from T5p to T5, from T5 to T6p, and from T6p to T6 each are defined as one sample. Here, the sample of from T3p to T3, the sample of from T4 to T5p, and the sample of from T6p to T6 each are a sample for an update to a TTML document in which region display-end-time information is filled.

Here, an event is provided for every sample. Accordingly, the event 1 includes the sample of from T1 to T2, the event 2 includes the sample of from T2 to T3p, an event 3 includes the sample of from T3p to T3, an event 4 includes the sample of from T3 to T4, an event 5 includes the sample of from T4 to T5p, an event 6 includes the sample of from T5p to T5, an event 7 includes the sample of from T5 to T6p, and an event 8 includes the sample of from T6p to T6.

In accordance with each event, a PES packet (container packet) having a segment packet of a TTML document (subtitle segment_type = 0xA0) including region information regarding the event, disposed in a payload, is generated and is transmitted. In this case, the value of presentation time stamp (PTS) to be inserted into the header of each PES packet, is the start time of the corresponding sample (Sample start time).

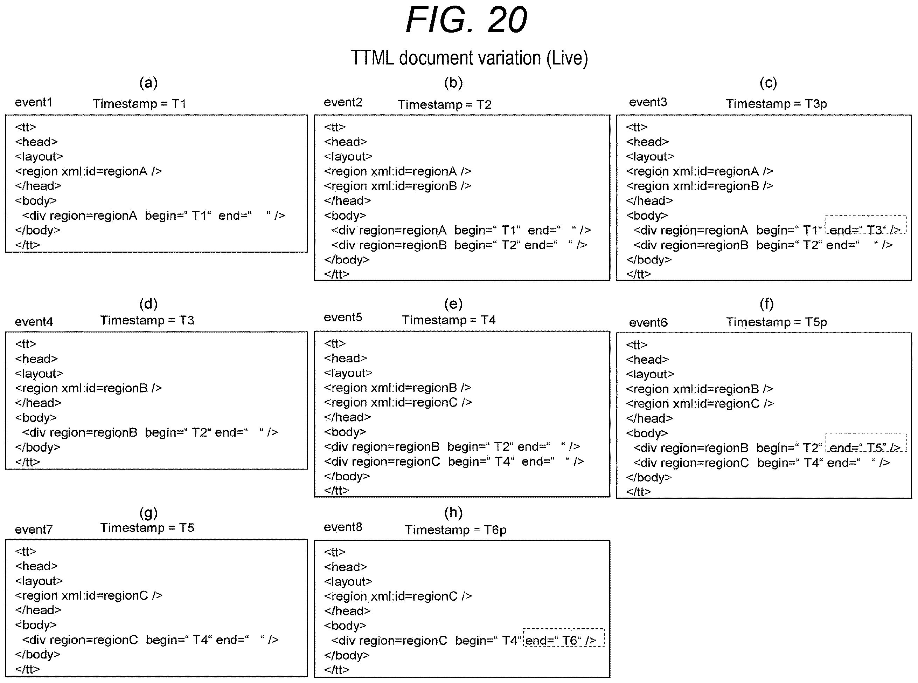

Figs. 20(a) to 20(h) schematically illustrate the contents of the respective TTML documents of the events according to an embodiment of the claimed invention. Fig. 20(a) illustrates the TTML document corresponding to the event 1. The TTML document includes only the information regarding the region A. In this case, the start time and the end time of the region A are rendered in "begin="T1"end=" "".

Fig. 20(b) illustrates the TTML document corresponding to the event 2. The TTML document includes the information regarding the region B together with the information regarding the region A. In this case, the start time and the end time of the region A are rendered in "begin="T1"end=" "", and the start time and the end time of the region B are rendered in "begin="T2"end=" "".

Fig. 20(c) illustrates the TTML document corresponding to the event 3. The TTML document includes the information regarding the region B together with the information regarding the region A. In this case, the start time and the end time of the region A are rendered in "begin="T1"end="T3"", and the start time and the end time of the region B are rendered in "begin="T2"end=" "". In this case, as indicated in a broken-line rectangular box, the TTML document is filled with region-A display-end-time information.

Fig. 20(d) illustrates the TTML document corresponding to the event 4. The TTML document includes only the information regarding the region B. In this case, the start time and the end time of the region B are rendered in "begin="T2"end=" "".

Fig. 20(e) illustrates the TTML document corresponding to the event 5. The TTML document includes the information regarding the region C together with the information regarding the region B. In this case, the start time and the end time of the region B are rendered in "begin="T2"end=" "", and the start time and the end time of the region C are rendered in "begin="T4"end=" "".

Fig. 20(f) illustrates the TTML document corresponding to the event 6. The TTML document includes the information regarding the region C together with the information regarding the region B. In this case, the start time and the end time of the region B are rendered in "begin="T2"end="T5"", and the start time and the end time of the region C are rendered in "begin="T4"end=" "". In this case, as indicated in a broken-line rectangular box, the TTML document is filled with region-B display-end-time information.

Fig. 20(g) illustrates the TTML document corresponding to the event 7. The TTML document includes only the information regarding the region C. In this case, the start time and the end time of the region B are rendered in "begin="T4"end=" "".

Fig. 20(h) illustrates the TTML document corresponding to the event 8. The TTML document includes only the information regarding the region C. In this case, the start time and the end time of the region C are rendered in "begin="T4"end="T6"". In this case, as indicated in a broken-line rectangular box, the TTML document is filled with region-C display-end-time information.

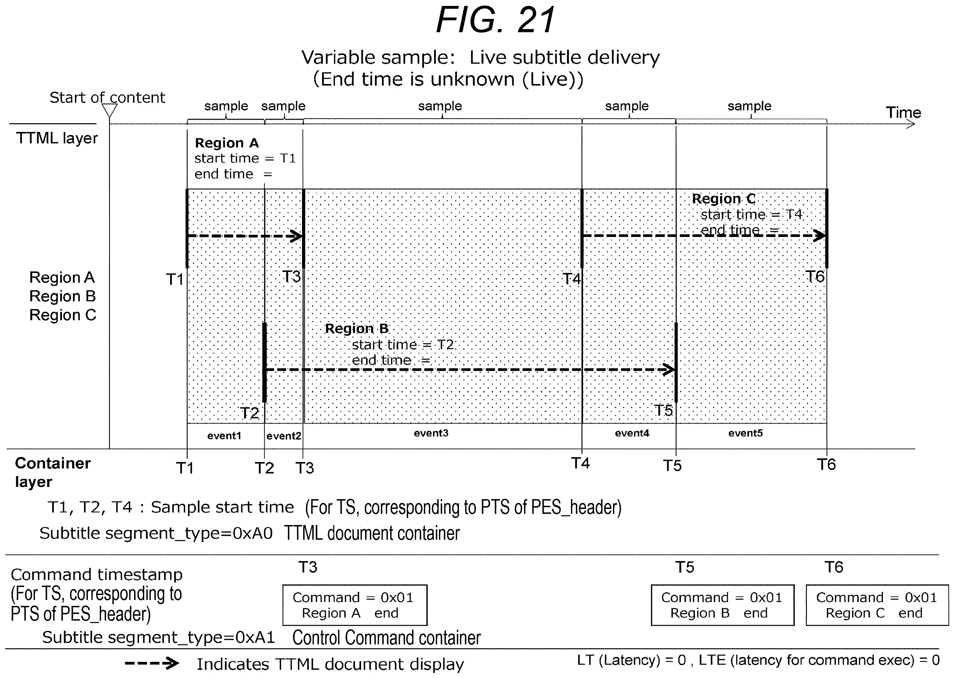

Next, other live subtitle delivery with variable samples will be described. Fig. 21 illustrates an exemplary TTML layer and an exemplary container layer in that case.

Information regarding a region A is present in the TTML layer. The region A is displayed from timing T1 to timing T3 at the end, but T3 cannot get previously known. Therefore, initially, only the fact that "start time" is T1 is written and a blank is rendered for an end time "end time" in a TTML document, in relation to the region A.

Furthermore, information regarding a region B is present in the TTML layer. The region B is displayed from timing T2 to timing T5 at the end, partially overlapping with the region A described above, temporally, but T5 cannot get previously known. Therefore, initially, only the fact that "start time" is T2 is written and a blank is rendered for an end time "end time" in a TTML document, in relation to the region B.

Moreover, information regarding a region C is present in the TTML layer. The region C is displayed from timing T4 to timing T6 at the end, partially overlapping with the region B described above, temporally, but T6 cannot get previously known. Therefore, initially, only the fact that "start time" is T4 is written and a blank is rendered for an end time "end time" in a TTML document, in relation to the region C.

In this case, as illustrated in Fig. 21, from T1 to T2, from T2 to T3, from T3 to T4, from T4 to T5, and from T5 to T6 each are defined as one sample. Here, an event is provided for every sample. Accordingly, an event 1 includes the sample of from T1 to T2, an event 2 includes the sample of from T2 to T3, an event 3 includes the sample of from T3 to T4, an event 4 includes the sample of from T4 to T5, and an event 5 includes the sample of from T5 to T6.

In accordance with each event, a PES packet (container packet) having a segment packet of a TTML document (subtitle segment_type = 0xA0) including region information regarding the event, disposed in a payload, is generated and is transmitted. In this case, the value of presentation time stamp (PTS) to be inserted into the header of each PES packet, is the start time of the corresponding sample (Sample start time).

Then, each PES packet is transmitted so as to arrive at the reception side at least at the start time of the corresponding sample. For example, a PES packet having a segment packet of a TTML document including the region information regarding the event 1, disposed in a payload, is transmitted so as to arrive at the reception side before the time T1. Furthermore, for example, a PES packet having a segment packet of a TTML document including the region information regarding the event 2, disposed in a payload, is transmitted so as to arrive at the reception side before the time T2. A similar manner is made for the others.

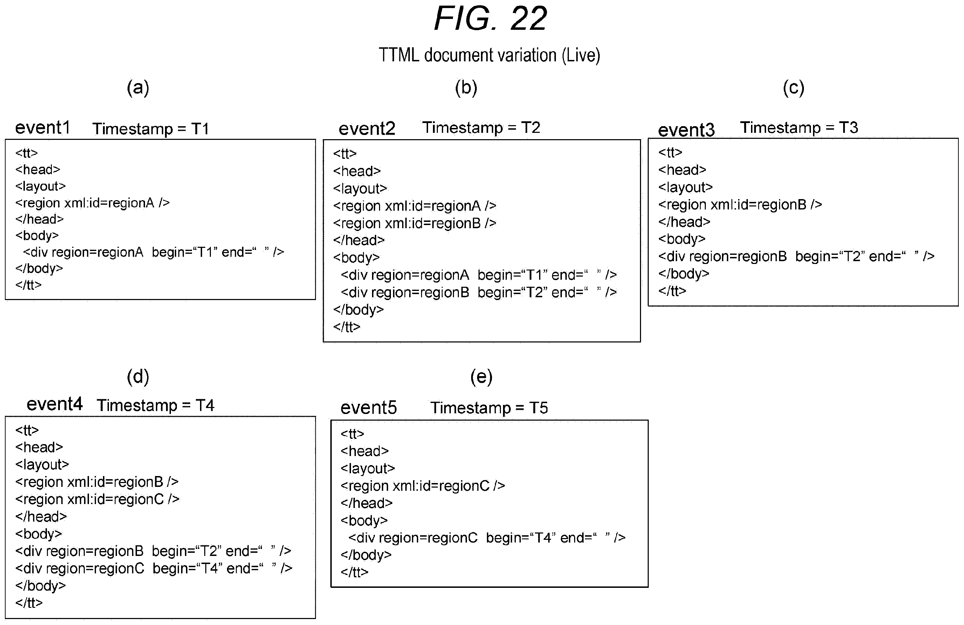

Figs. 22(a) to 22(e) schematically illustrate the contents of the respective TTML documents corresponding to the events. Fig. 22(a) illustrates the TTML document corresponding to the event 1. The TTML document includes only the information regarding the region A. In this case, the start time and the end time of the region A are rendered in "begin="T1"end=" "".

Fig. 22(b) illustrates the TTML document corresponding to the event 2. The TTML document includes the information regarding the region B together with the information regarding the region A. In this case, the start time and the end time of the region A are rendered in "begin="T1"end=" "", and the start time and the end time of the region B are rendered in "begin="T2"end=" "".

Fig. 22(c) illustrates the TTML document corresponding to the event 3. The TTML document includes only the information regarding the region B. In this case, the start time and the end time of the region B are rendered in "begin="T2"end=" "".

Fig. 22(d) illustrates the TTML document corresponding to the event 4. The TTML document includes the information regarding the region C together with the information regarding the region B. In this case, the start time and the end time of the region B are rendered in "begin="T2"end=" "", and the start time and the end time of the region C are rendered in "begin="T4"end=" "".

Fig. 22(e) illustrates the TTML document corresponding to the event 5. The TTML document includes only the information regarding the region C. In this case, the start time and the end time of the region C are rendered in "begin="T4"end=" "".

In a case where the display end times of the regions A, B, and C get known in the example, a PES packet having a segment packet of a control command for giving region display-end-time information (command=0x01) (subtitle segment_type = 0xA2), disposed in a payload, is generated and is transmitted so as to arrive at the reception side before each of the times. In this case, the value of presentation time stamp (PTS) to be inserted into the header of the PES packet, indicates the region display end time. Accordingly, in this case, the region display end time is given with PTS.

Note that it is considered that region display-end-time information is given to the reception side with a control command (command=0x03) instead of with the control command (command=0x01) (refer to Figs. 9 and 10). In this case, a region display state is indicated with a count at previously defined time intervals, such as intervals of one second, and a PES packet having a segment packet of a control command including the count (command=0x03) (subtitle segment_type = 0xA2), disposed in a payload, is generated and is transmitted sequentially.

In this case, the value of presentation time stamp (PTS) to be inserted into the header of the PES packet indicates the transmission time of the PES packet, for example. Then, in this case, when the count indicates the end, the region display end time is given by addition of a time offset added to the count, to PTS.

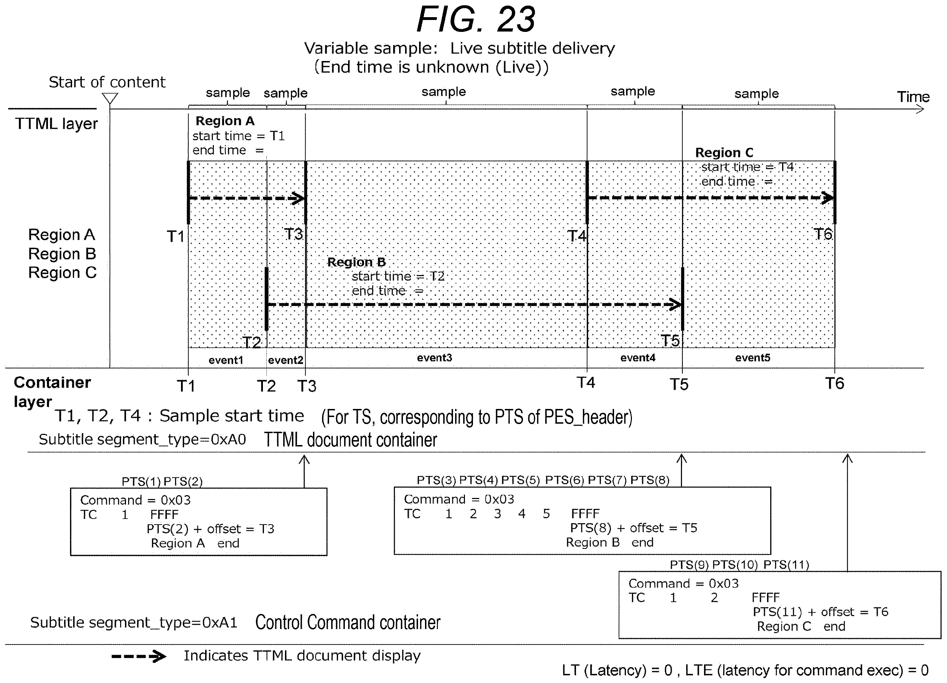

Fig. 23 illustrates an exemplary TTML layer and an exemplary container layer in that case. For example, regarding a region A, PES packets having segment packets of respective control commands including "1" and "FFFF" as a count TC (command=0x03) (subtitle segment_type = 0xA2), disposed in payloads, each are generated and are transmitted sequentially at intervals of one second after time T1 passes.

In this case, because the display end time of the region A gets known as T3 after the transmission of the PES packet according to "1" as the count TC, "FFFF" indicating a display end as the next count TC, with a time offset "offset" added thereto, is transmitted, and PTS is PTS(2) at this time. Here, the relationship of T3 = PTS(2) + offset is satisfied.

Furthermore, regarding a region B, PES packets having segment packets of respective control commands including "1", "2", "3", "4", "5", and "FFFF" as a count TC (command=0x03) (subtitle segment_type = 0xA2), disposed in payloads, each are generated and are transmitted sequentially at intervals of one second after time T2 passes.

In this case, because the display end time of the region B gets known as T5 after the transmission of the PES packet according to "5" as the count TC, "FFFF" indicating an display end as the next count TC, with a time offset "offset" added thereto, is transmitted, and PTS is PTS(8) at this time. Here, the relationship of T5 = PTS(8) + offset is satisfied.

Furthermore, regarding a region C, PES packets having segment packets of respective control commands including "1", "2", and "FFFF" as a count TC (command=0x03) (subtitle segment_type = 0xA2), disposed in payloads, each are generated and are transmitted sequentially at intervals of one second after time T4 passes.

In this case, because the display end time of the region C gets known as T6 after the transmission of the PES packet according to "2" as the count TC, "FFFF" indicating an display end as the next count TC, with a time offset "offset" added thereto, is transmitted, and PTS is PTS(11) at this time. Here, the relationship of T6 = PTS(11) + offset is satisfied.

Referring back to Fig. 2, the TS formatter 116 renders the video stream generated by the video encoder 112, the audio stream generated by the audio encoder 113, and the subtitle stream generated by the subtitle encoder 115 into transport packetization and performs multiplexing, to acquire the transport stream TS as a multiplexed stream.

The operation of the stream generation unit 110 illustrated in Fig. 2, will be briefly described. The image data DV is supplied to the video encoder 112. The video encoder 112 performs coding to the image data DV, to generate a video stream (PES stream) including video PES packets each having coded image data in a payload. The video stream is supplied to the TS formatter 116.

Furthermore, the audio data DA is supplied to the audio encoder 113. The audio encoder 113 performs coding to the audio data DA, to generate an audio stream (PES stream) including audio PES packets each having coded audio data. The audio stream is supplied to the TS formatter 116.

Furthermore, the text data (character code) DT as the subtitle information is supplied to the text format conversion unit 114. The text format conversion unit 114 acquires subtitle text information having display timing information, in a predetermined format, here, TTML. The TTML is supplied to the subtitle encoder 115.

The subtitle encoder 115 generates a segment packet including a document in TTML acquired by the text format conversion unit 114 (timed text subtitling segment: TT subtitling segment). Then, the subtitle encoder 115 generates a subtitle PES packet having the segment packet disposed in a payload.

The subtitle encoder 115 generates a subtitle PES packet for every sample. Furthermore, because region display end time is initially unknown for live subtitle delivery, the subtitle encoder 115 cannot insert the region display end time into the TTML document included in a subtitle PES packet, and thus renders a blank.

Thereafter, when the region display end time gets known, the subtitle encoder 115 generates a new subtitle PES packet in order to give or clearly indicate region display-end-time information to the reception side.

With the first method adopted, the subtitle encoder 115 generates a segment packet including a TTML document in which the region end-time information is filled (Subtitle segment_type=0xA0), and newly generates a subtitle PES packet having the segment packet disposed in a payload.

Meanwhile, with the second method adopted, the subtitle encoder 115 generates a segment packet including a control command for giving the region display-end-time information (Subtitle segment_type=0xA2), and newly generates a subtitle PES packet including the segment packet disposed in a payload.

Furthermore, the subtitle encoder 115 generates a segment packet including download information for downloading a font file designated in TTML font designation information, and disposes the segment packet in the payload of the PES packet.

The subtitle encoder 115 generates the subtitle stream (PES stream) including each subtitle PES packet described above. The subtitle stream is supplied to the TS formatter 116. The TS formatter 116 renders the respective streams generated by the encoders into transport packetization and performs multiplexing, to generates the transport stream TS as a multiplexed stream.

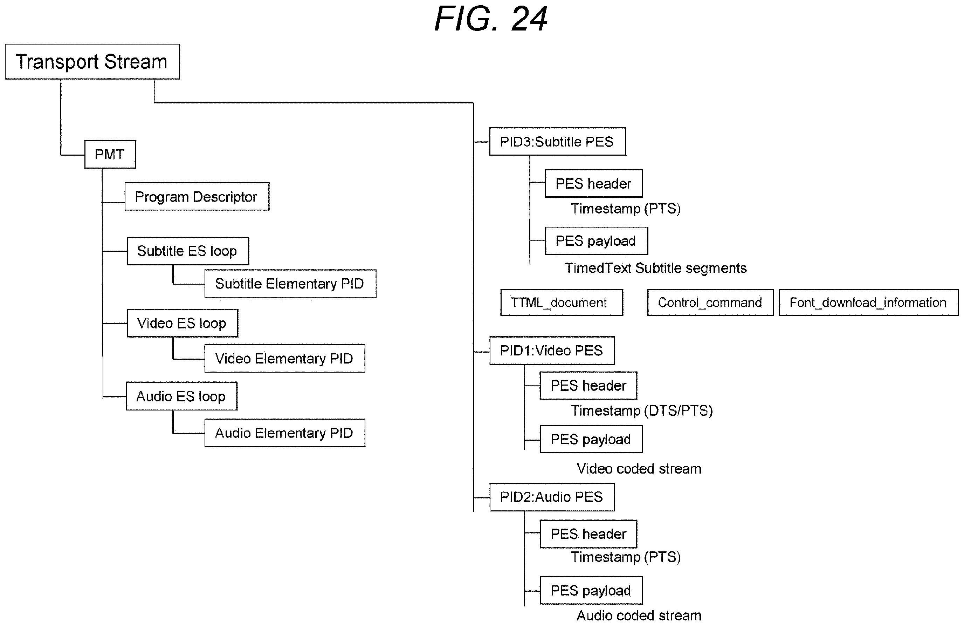

Fig. 24 illustrates an exemplary configuration of the transport stream TS. A video PES packet "Video PES" that is a PES packet of the video stream identified with PID1, is present in the exemplary configuration. Furthermore, an audio PES packet "Audio PES" that is a PES packet of the audio stream identified with PID2, is present in the exemplary configuration. Furthermore, a subtitle PES packet "Subtitle PES" that is a PES packet of the subtitle stream identified with PID3, is present in the exemplary configuration.

The PES packets each include a PES header (PES header) and a PES payload (PES payload). In the video PES packet, the time stamp of DTS/PTS is inserted in the PES header and a video coded stream (coded image data) is inserted in the PES payload. Furthermore, in the audio PES packet, the time stamp of PTS is inserted in the PES header and an audio coded stream (coded audio data) is inserted in the PES payload.

Furthermore, in the subtitle PES packet, the time stamp of PTS is inserted in the PES header and a segment packet (timed text subtitling segment: TT subtitling segment) having, for example, a TTML document, a control command, or font download information, is inserted in the PES payload.

Furthermore, the transport stream TS includes a program map table (PMT) as program specific information (PSI). The PSI is information describing to which program each elementary stream included in the transport stream TS belongs.

A program descriptor (Program Descriptor) in which information relating to the entirety of the programs is written, is present in the PMT. Furthermore, elementary-stream loops having respective pieces of information related to the elementary streams, are present in the PMT. A video elementary-stream loop (Video ES loop), an audio elementary-stream loop (Audio ES loop), and a subtitle elementary-stream loop (Subtitle ES loop) are present in the exemplary configuration. Information regarding, for example, a packet identifier (PID) is disposed in each loop.

### [Exemplary Configuration of Television Receiver]

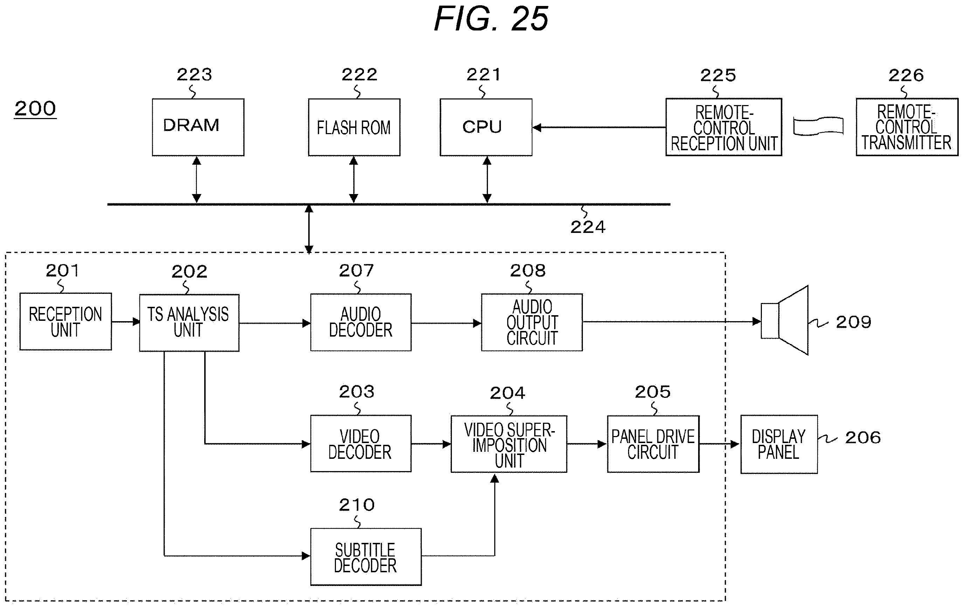

Fig. 25 illustrates an exemplary configuration of the television receiver 200. The television receiver 200 has a reception unit 201, a TS analysis unit (demultiplexer) 202, a video decoder 203, a video superimposition unit 204, a panel drive circuit 205, and a display panel 206. Furthermore, the television receiver 200 has an audio decoder 207, an audio output circuit 208, a speaker 209, and a subtitle decoder 210. Furthermore, the television receiver 200 has a CPU 221, a flash ROM 222, a DRAM 223, an internal bus 224, a remote-control reception unit 225, and a remote-control transmitter 226.

The CPU 221 controls the operation of each unit of the television receiver 200. The flash ROM 222 stores control software and retains data. The DRAM 223 forms a work area for the CPU 221. The CPU 221 develops the software and the data read from the flash ROM 222 onto the DRAM 223 and boots the software so as to control each unit of the television receiver 200.

The remote-control reception unit 225 receives a remote-control signal (remote-control code) transmitted from the remote-control transmitter 226 and supplies the remote-control signal to the CPU 221. The CPU 221 controls each unit of the television receiver 200 on the basis of the remote-control code. The CPU 221, the flash ROM 222, and the DRAM 223 are connected to the internal bus 224.

The reception unit 201 receives the transport stream TS superimposed and sent on the broadcast wave from the broadcast output system 100. The transport stream TS includes, as described above, the video stream, the audio stream, and the subtitle stream. The TS analysis unit 202 extracts the respective streams of video, audio, and subtitles from the transport stream TS.

The audio decoder 207 performs decoding processing to the audio stream extracted by the TS analysis unit 202, to acquire the audio data. The audio output circuit 208 performs necessary processing, such as D/A conversion and amplification, to the audio data, and supplies the audio data to the speaker 209. The video decoder 203 performs decoding processing to the video stream extracted by the TS analysis unit 202, to acquire the image data.

The subtitle decoder 210 performs decoding processing to the subtitle stream extracted by the TS analysis unit 202, to acquire bitmap data of each region to be superimposed onto the image data. Here, the subtitle decoder 210 extracts, from a segment packet including a TTML document, the segment packet and acquires the bitmap data of each region on the basis of the TTML document.

Furthermore, the subtitle decoder 210 extracts, from a segment packet including a control command for giving region display-end-time information, the segment packet and sends the control command thereof to the CPU 221. The CPU 221 acquires the region display end time, on the basis of the control command.

Here, for a control command (command=0x01), the CPU 221 acquires PTS inserted in the header of the PES packet as the region display end time. Furthermore, for a control command (command=0x03), the CPU 221 acquires, when the count indicates the end, the time offset that has been added to the count, added to PTS that has been inserted in the header of the PES packet, as the display end time.

Furthermore, the subtitle decoder 210 extracts, from a segment packet including font download information, the segment packet and sends the font download information to the CPU 221. The CPU 221 acquires, from the font download segment, at least information for downloading a font file designated in TTML-document font designation information.

The video superimposition unit 204 superimposes the bitmap data of each region acquired from the subtitle decoder 210, onto the image data acquired by the video decoder 203. In this case, the video superimposition unit 204 superimposes the bitmap data of each region by the period from the display start time to the display end time of each region.

Here, the display start time is acquired from the region display-start-time information included in each TTML document. For the pre-authored subtitle delivery, the display end time is acquired from the region display-end-time information included in each TTML document (refer to Figs. 13 and 17).

Furthermore, for the live subtitle delivery, the display end time is acquired from the region display-end-time information included in each updated TTML document when the first method is adopted (refer to Fig. 19) and is acquired from each control command when the second method is adopted (refer to Figs. 15, 21, and 23).

The panel drive circuit 205 drives the display panel 206, on the basis of the image data for display acquired by the video superimposition unit 204. The display panel 206 includes, for example, a liquid crystal display (LCD), an organic electroluminescence (EL) display, or the like.

The operation of the television receiver 200 illustrated in Fig. 25, will be briefly described. The reception unit 201 receives the transport stream TS superimposed and sent on the broadcast wave from the broadcast output system 100. The transport stream TS includes the video stream, the audio stream, and the subtitle stream.

The transport stream TS is supplied to the TS analysis unit 202. The TS analysis unit 202 extracts the respective streams of video, audio, and subtitles from the transport stream TS. The video stream (PES stream) extracted by the TS analysis unit 202 is supplied to the video decoder 203. The video decoder 203 performs decoding processing to the video stream, to acquire the image data. The image data is supplied to the video superimposition unit 204.

Furthermore, the subtitle stream (PES stream) extracted by the TS analysis unit 202, is supplied to the subtitle decoder 210. The subtitle decoder 210 performs decoding processing to the subtitle stream, to acquire bitmap data of each region to be superimposed onto the image data.

Furthermore, the subtitle decoder 210 extracts, from a segment packet including a control command for giving region display-end-time information, the segment packet and sends the control command to the CPU 221. The CPU 221 acquires the region display end time, on the basis of the control command.

Furthermore, the subtitle decoder 210 extracts, from a segment packet including font download information, the segment packet and sends the font download information to the CPU 221. The CPU 221 acquires, from the font download segment, at least information for downloading a font file designated in TTML-document font designation information. The information is used as necessary in order to acquire the font file.

The bitmap data of each region output from the subtitle decoder 210, is supplied to the video superimposition unit 204. The video superimposition unit 204 superimposes the bitmap data of each region output from the subtitle decoder 210, onto the image data acquired by the video decoder 203. In this case, the bitmap data of each region is superimposed by the period from the display start time to the display end time of each region.

Here, the display start time is acquired from the region display-start-time information included in each TTML document. Furthermore, for the pre-authored subtitle delivery, the display end time is acquired from the region display-end-time information included in each TTML document (refer to Figs. 13 and 17). Furthermore, for the live subtitle delivery, the display end time is acquired from the region display-end-time information included in each updated TTML document when the first method is adopted (refer to Fig. 19) and is acquired from each control command when the second method is adopted (refer to Figs. 15, 21, and 23).

The image data for display acquired by the video superimposition unit 204, is supplied to the panel drive circuit 205. The panel drive circuit 205 drives the display panel 206, on the basis of the image data for display. This arrangement allows the display panel 206 to display the image on which each region is superimposed.

As described above, although the broadcast output system 100 in the transmission and reception system 10 illustrated in Fig. 1 generates a subtitle PES packet having a segment packet having a TTML document, disposed in a payload, for every sample, the period of each sample is varied, for example, in accordance with a variation period of subtitle display. Therefore, the transmission frequency of a subtitle PES packet can be inhibited, so that transport efficiency can improve.

Furthermore, for the live subtitle delivery, the broadcast output system 100 in the transmission and reception system 10 illustrated in Fig. 1 sends the region display-end-time information with the TTML layer (first method) or the container layer (second method) when the region display end time gets known. Therefore, the region display-end-time information can be given to the reception side, so that the region display end processing can be performed properly on the reception side.

Furthermore, for the live subtitle delivery, the broadcast output system 100 in the transmission and reception system 10 illustrated in Fig. 1 newly generates and transmits, for example, a PES packet having a segment packet having a control command for giving region display-end-time information, inserted in a payload, when the region display end time gets known (second method). Therefore, even in a case where the period of each sample is fixed, the region display-end-time information can be favorably given to the reception side, so that the region display end processing can be performed properly on the reception side.

### <2. Modification>

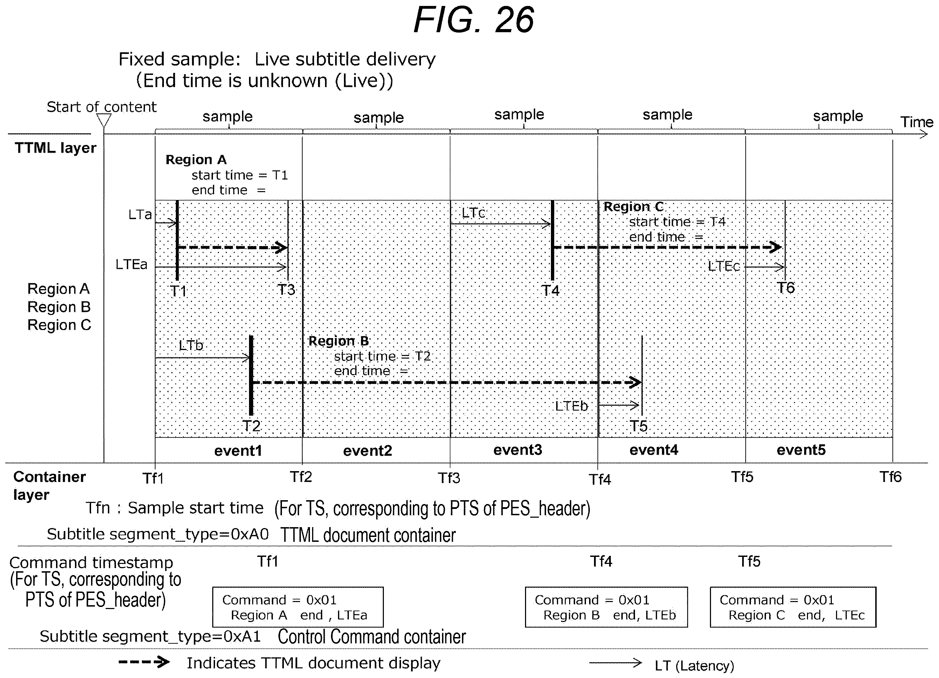

Note that, the case where the command packet transport is not limited to the fixed samples, has been given in Fig. 15 described above. However, similarly to the TTML document transport, it is assumed that the command packet transport is performed under limitation due to the fixed samples. In that case, as illustrated in Fig. 26, signalization of "latency(LTEn)" from PTS enables desired timing designation to command execution of a display end (refer to Fig. 9).

Furthermore, the example in which TTML is used as the subtitle text information having the display timing information, in the predetermined format, has been given in the embodiment described above. However, the present technology is not limited to this, and thus it is considered that other timed text information having information similar to that of TTML is used. For example, a TTML derived format may be used.

Furthermore, the transmission and reception system 10 including the broadcast output system 100 and the television receiver 200 has been given in the embodiment described above, but the configuration of a transmission and reception system to be acquired by the application of the present technology is not limited to this. For example, the part of the television receiver 200 may include a set-top box and a monitor connected through a digital interface, such as high-definition multimedia interface (HDMI). Note that "HDMI" is a registered trademark.

Furthermore, the example in which the container (multiplexed stream) is the MPEG-2 transport stream, has been given in the embodiment described above. Needless to say, the present technology can be applied similarly even in a case where the multiplexed stream is, for example, an MMT stream or a DASH/ISOBMFF stream.

According to a main feature of the present technology, varying the period of each sample in accordance with a variation period of subtitle display inhibits the transmission frequency of a subtitle PES packet including a TTML document, so that transport efficiency can improve (refer to Fig. 17). Furthermore, according to a main feature of the present technology, for live subtitle delivery, when region display end time gets known, transmission of region display-end-time information with a TTML layer or a container layer, allows region display end processing to be performed properly on the reception side (refer to Figs. 15, 19, 21, and 23).

### REFERENCE SIGNS LIST

- 10: Transmission and reception system
- 100: Broadcast output system
- 110: Stream generation unit
- 111: Control unit
- 112: Video encoder
- 113: Audio encoder
- 114: Text format conversion unit
- 115: Subtitle encoder
- 116: TS formatter
- 200: Television receiver
- 201: Reception unit
- 202: TS analysis unit
- 203: Video decoder
- 204: Video superimposition unit
- 205: Panel drive circuit
- 206: Display panel
- 207: Audio decoder
- 208: Audio output circuit
- 209: Speaker
- 210: Subtitle decoder
- 221: CPU
- 222: Flash ROM
- 223: DRAM
- 224: Internal bus
- 225: Remote-control reception unit
- 226: Remote-control transmitter

## Claims

1. A transmission device (100) for transmitting a plurality of subtitles for different regions, the transmission device (100) comprising:
a packet generation unit (115) configured to generate for each of a plurality of consecutive samples of variable duration a respective Packetized Elementary Stream, PES, packet comprising a Timed Text Markup Language, TTML, document of subtitle text information in a payload, wherein each TTML document of subtitle text information comprises display timing information for the related sample, wherein each display timing information indicates at least a display start time for a subtitle of the plurality of subtitles that is to be displayed in the related sample, wherein the display timing information in a first PES packet of the PES packets does not indicate a display end time for the subtitle, wherein the display timing information in a succeeding second PES packet of the PES packets indicates the display end time for the subtitle, and wherein display of the subtitle is to be ended in the sample related to the second PES packet; and
a transmission unit (116) configured to transmit the PES packets as a subtitle stream,
wherein for each of the plurality of consecutive samples a start time of the respective sample coincides with the display start time for one of the plurality of subtitles or an end time of the respective sample coincides with a display end time for one of the plurality of subtitles.

2. The transmission device (100) according to claim 1, wherein each of the PES packets includes a respective header with a time stamp indicating the start time of the related sample.

3. A reception device (200) for receiving a plurality of subtitles for different regions, the reception device (200) comprising:
a reception unit (201) configured to receive for each of a plurality of consecutive samples of variable duration a respective Packetized Elementary Stream, PES, packet comprising a Timed Text Markup Language, TTML, document of subtitle text information in a payload, wherein each TTML document of subtitle text information comprises display timing information for the related sample, wherein each display timing information indicates at least a display start time for a subtitle of the plurality of subtitles that is to be displayed in the related sample, and wherein for each of the plurality of consecutive samples a start time of the respective sample coincides with the display start time for one of the plurality of subtitles or an end time of the respective sample coincides with a display end time for one of the plurality of subtitles; and
a control unit (210) configured to control subtitle display based on the TTML documents of subtitle text information disposed in the PES packets, wherein the display timing information in a first PES packet of the PES packets does not indicate a display end time for the subtitle, wherein the display timing information in a succeeding second PES packet of the PES packets indicates the display end time for the subtitle, wherein display of the subtitle is to be ended in the sample related to the second PES packet, and wherein the control unit (210) is configured to end subtitle display based on the display timing information disposed in the second PES packet.

4. The reception device (200) according to claim 3, wherein each of the PES packets includes a respective header with a time stamp indicating the start time of the related sample.

5. A transmission method for transmitting a plurality of subtitles for different regions, the method comprising:
generating for each of a plurality of consecutive samples of variable duration a respective Packetized Elementary Stream, PES, packet comprising a Timed Text Markup Language, TTML, document of subtitle text information in a payload, wherein each TTML document of subtitle text information comprises display timing information for the related sample, wherein each display timing information indicates at least a display start time for a subtitle of the plurality of subtitles that is to be displayed in the related sample, wherein the display timing information in a first PES packet of the PES packets does not indicate a display end time for the subtitle, wherein the display timing information in a succeeding second PES packet of the PES packets indicates the display end time for the subtitle, and wherein display of the subtitle is to be ended in the sample related to the second PES packet; and
transmitting the PES packets as a subtitle stream,
wherein for each of the plurality of consecutive samples a start time of the respective sample coincides with the display start time for one of the plurality of subtitles or an end time of the respective sample coincides with a display end time for one of the plurality of subtitles.

6. The transmission method according to claim 5, wherein each of the PES packets includes a respective header with a time stamp indicating the start time of the related sample.

7. A reception method for receiving a plurality of subtitles for different regions, the method comprising:
receiving for each of a plurality of consecutive samples of variable duration a respective Packetized Elementary Stream, PES, packet comprising a Timed Text Markup Language, TTML, document of subtitle text information in a payload, wherein each TTML document of subtitle text information comprises display timing information for the related sample, wherein each display timing information indicates at least a display start time for a subtitle of the plurality of subtitles that is to be displayed in the related sample, and wherein for each of the plurality of consecutive samples a start time of the respective sample coincides with the display start time for one of the plurality of subtitles or an end time of the respective sample coincides with a display end time for one of the plurality of subtitles; and
controlling subtitle display based on the TTML documents of subtitle text information disposed in the PES packets, wherein the display timing information in a first PES packet of the PES packets does not indicate a display end time for the subtitle, wherein the display timing information in a succeeding second PES packet of the PES packets indicates the display end time for the subtitle, wherein display of the subtitle is to be ended in the sample related to the second PES packet, and wherein the subtitle display is ended based on the display timing information disposed in the second PES packet.

8. The reception method according to claim 7, wherein each of the PES packets includes a respective header with a time stamp indicating the start time of the related sample.

## Patentansprüche

1. Übertragungsvorrichtung (100) zum Übertragen einer Mehrzahl von Untertiteln für unterschiedliche Regionen, wobei die Übertragungsvorrichtung (100) umfasst:
eine Paketerzeugungseinheit (115), die dazu konfiguriert ist, für jede einer Mehrzahl von aufeinanderfolgenden Abtastungen von variabler Dauer ein jeweiliges paketiertes Elementarstrom, PES,-Paket zu erzeugen, das ein "Timed Text Markup Language", TTML,-Dokument einer Untertiteltextinformation in Nutzdaten umfasst, wobei jedes TTML-Dokument einer Untertiteltextinformation eine Anzeigezeitinformation für die zugehörige Abtastung umfasst, wobei jede Anzeigezeitinformation mindestens eine Anzeigestartzeit für einen Untertitel der Mehrzahl von Untertiteln anzeigt, der in der zugehörigen Abtastung angezeigt werden soll, wobei die Anzeigezeitinformation in einem ersten PES-Paket der PES-Pakete nicht eine Anzeigeendzeit für den Untertitel anzeigt, wobei die Anzeigezeitinformation in einem nachfolgenden zweiten PES-Paket der PES-Pakete die Anzeigeendzeit für den Untertitel anzeigt, und wobei eine Anzeige des Untertitels in der zu dem zweiten PES-Paket zugehörigen Abtastung beendet werden soll; und
eine Übertragungseinheit (116), die dazu konfiguriert ist, die PES-Pakete als einen Untertitelstrom zu übertragen, wobei für jede der Mehrzahl von aufeinanderfolgenden Abtastungen eine Startzeit der jeweilige Abtastung mit der Anzeigestartzeit für einen der Mehrzahl von Untertiteln übereinstimmt oder eine Endzeit der jeweiligen Abtastung mit einer Anzeigeendzeit für einen der Mehrzahl von Untertiteln übereinstimmt.

2. Übertragungsvorrichtung (100) nach Anspruch 1, wobei jedes der PES-Pakete eine jeweilige Kopfzeile mit einem Zeitstempel umfasst, der die Startzeit der zugehörigen Abtastung anzeigt.

3. Empfangsvorrichtung (200) zum Empfangen einer Mehrzahl von Untertiteln für unterschiedliche Regionen, wobei die Empfangsvorrichtung (200) umfasst:
eine Empfangseinheit (201), die dazu konfiguriert ist, für jede einer Mehrzahl von aufeinanderfolgenden Abtastungen von variabler Dauer ein jeweiliges paketiertes Elementarstrom, PES,-Paket zu empfangen, das ein "Timed Text Markup Language", TTML,-Dokument einer Untertiteltextinformation in Nutzdaten umfasst, wobei jedes TTML-Dokument einer Untertiteltextinformation eine Anzeigezeitinformation für die zugehörige Abtastung umfasst, wobei jede Anzeigezeitinformation mindestens eine Anzeigestartzeit für einen Untertitel der Mehrzahl von Untertiteln anzeigt, der in der zugehörigen Abtastung angezeigt werden soll, und wobei für jede der Mehrzahl von aufeinanderfolgenden Abtastungen eine Startzeit der jeweilige Abtastung mit der Anzeigestartzeit für einen der Mehrzahl von Untertiteln übereinstimmt oder eine Endzeit der jeweiligen Abtastung mit einer Anzeigeendzeit für einen der Mehrzahl von Untertiteln übereinstimmt; und
eine Steuereinheit (210), die dazu konfiguriert ist, eine Untertitelanzeige basierend auf den TTML-Dokumenten einer Untertiteltextinformation zu steuern, die sich in den PES-Paketen befindet, wobei die Anzeigezeitinformation in einem ersten PES-Paket der PES-Pakete nicht eine Anzeigeendzeit für den Untertitel anzeigt, wobei die Anzeigezeitinformation in einem nachfolgenden zweiten PES-Paket der PES-Pakete die Anzeigeendzeit für den Untertitel anzeigt, wobei eine Anzeige des Untertitels in der zu dem zweiten PES-Paket zugehörigen Abtastung beendet werden soll, und wobei die Steuereinheit (210) dazu konfiguriert ist, eine Untertitelanzeige basierend auf der Anzeigezeitinformation zu beenden, die sich in dem zweiten PES-Paket befindet.

4. Empfangsvorrichtung (200) nach Anspruch 3, wobei jedes der PES-Pakete eine jeweilige Kopfzeile mit einem Zeitstempel umfasst, der die Startzeit der zugehörigen Abtastung anzeigt.

5. Übertragungsverfahren zum Übertragen einer Mehrzahl von Untertiteln für unterschiedliche Regionen, wobei das Verfahren umfasst:
Erzeugen, für jede eine Mehrzahl von aufeinanderfolgenden Abtastungen von variabler Dauer, eines jeweiligen paketierten Elementarstrom, PES,-Pakets, das ein "Timed Text Markup Language", TTML,-Dokument einer Untertiteltextinformation in Nutzdaten umfasst, wobei jedes TTML-Dokument einer Untertiteltextinformation eine Anzeigezeitinformation für die zugehörige Abtastung umfasst, wobei jede Anzeigezeitinformation mindestens eine Anzeigestartzeit für einen Untertitel der Mehrzahl von Untertiteln anzeigt, der in der zugehörigen Abtastung angezeigt werden soll, wobei die Anzeigezeitinformation in einem ersten PES-Paket der PES-Pakete nicht eine Anzeigeendzeit für den Untertitel anzeigt, wobei die Anzeigezeitinformation in einem nachfolgenden zweiten PES-Paket der PES-Pakete die Anzeigeendzeit für den Untertitel anzeigt, und wobei eine Anzeige des Untertitels in der zu dem zweiten PES-Paket zugehörigen Abtastung beendet werden soll; und
Übertragungen der PES-Pakete als einen Untertitelstrom, wobei für jede der Mehrzahl von aufeinanderfolgenden Abtastungen eine Startzeit der jeweilige Abtastung mit der Anzeigestartzeit für einen der Mehrzahl von Untertiteln übereinstimmt oder eine Endzeit der jeweiligen Abtastung mit einer Anzeigeendzeit für einen der Mehrzahl von Untertiteln übereinstimmt.

6. Übertragungsverfahren nach Anspruch 5, wobei jedes der PES-Pakete eine jeweilige Kopfzeile mit einem Zeitstempel umfasst, der die Startzeit der zugehörigen Abtastung anzeigt.

7. Empfangsverfahren zum Empfangen einer Mehrzahl von Untertiteln für unterschiedliche Regionen, wobei das Verfahren umfasst:
Empfangen, für eine Mehrzahl von aufeinanderfolgenden Abtastungen von variabler Dauer, eines jeweiligen paketierten Elementarstrom, PES,-Pakets, das ein "Timed Text Markup Language", TTML,-Dokument einer Untertiteltextinformation in Nutzdaten umfasst, wobei jedes TTML-Dokument einer Untertiteltextinformation eine Anzeigezeitinformation für die zugehörige Abtastung umfasst, wobei jede Anzeigezeitinformation mindestens eine Anzeigestartzeit für einen Untertitel der Mehrzahl von Untertiteln anzeigt, der in der zugehörigen Abtastung angezeigt werden soll, und wobei für jede der Mehrzahl von aufeinanderfolgenden Abtastungen eine Startzeit der jeweilige Abtastung mit der Anzeigestartzeit für einen der Mehrzahl von Untertiteln übereinstimmt oder eine Endzeit der jeweiligen Abtastung mit einer Anzeigeendzeit für einen der Mehrzahl von Untertiteln übereinstimmt; und
Steuern einer Untertitelanzeige basierend auf den TTML-Dokumenten einer Untertiteltextinformation, die sich in den PES-Paketen befindet, wobei die Anzeigezeitinformation in einem ersten PES-Paket der PES-Pakete nicht eine Anzeigeendzeit für den Untertitel anzeigt, wobei die Anzeigezeitinformation in einem nachfolgenden zweiten PES-Paket der PES-Pakete die Anzeigeendzeit für den Untertitel anzeigt, wobei eine Anzeige des Untertitels in der zu dem zweiten PES-Paket zugehörigen Abtastung beendet werden soll, und wobei die Untertitelanzeige basierend auf der Anzeigezeitinformation beendet wird, die sich in dem zweiten PES-Paket befindet.

8. Empfangsverfahren nach Anspruch 7, wobei jedes der PES-Pakete eine jeweilige Kopfzeile mit einem Zeitstempel umfasst, der die Startzeit der jeweiligen Abtastung anzeigt.

## Revendications

1. Dispositif (100) d'émission destiné à émettre une pluralité de sous-titres pour différentes régions, le dispositif (100) d'émission comportant :
une unité (115) de génération de paquets configurée pour générer, pour chaque échantillon d'une pluralité d'échantillons consécutifs de durée variable, un paquet respectif de flux élémentaire en mode paquet, PES, comportant un document en langage de balisage de texte minuté, TTML, d'informations de texte de sous-titre dans une charge utile, chaque document TTML d'informations de texte de sous-titre comportant des informations de minutage d'affichage relatives à l'échantillon associé, chaque information de minutage d'affichage indiquant au moins un instant de début d'affichage pour un sous-titre de la pluralité de sous-titres qui doit être affiché dans l'échantillon associé, les informations de minutage d'affichage dans un premier paquet de PES parmi les paquets de PES n'indiquant pas un instant de fin d'affichage pour le sous-titre, les informations de minutage d'affichage dans un second paquet de PES subséquent parmi les paquets de PES indiquant l'instant de fin d'affichage pour le sous-titre, et l'affichage du sous-titre devant prendre fin dans l'échantillon associé au second paquet de PES ; et
une unité (116) d'émission configurée pour émettre les paquets de PES comme un flux de sous-titres,
pour chaque échantillon de la pluralité d'échantillons consécutifs, un instant de début de l'échantillon considéré coïncidant avec l'instant de début d'affichage pour un sous-titre parmi la pluralité de sous-titres ou un instant de fin de l'échantillon considéré coïncidant avec un instant de fin d'affichage pour un sous-titre parmi la pluralité de sous-titres.

2. Dispositif (100) d'émission selon la revendication 1, chacun des paquets de PES comprenant un en-tête respectif doté d'une estampille temporelle indiquant l'instant de début de l'échantillon associé.

3. Dispositif (200) de réception destiné à recevoir une pluralité de sous-titres pour différentes régions, le dispositif (200) de réception comportant :
une unité (201) de réception configurée pour recevoir, pour chaque échantillon d'une pluralité d'échantillons consécutifs de durée variable, un paquet respectif de flux élémentaire en mode paquet, PES, comportant un document en langage de balisage de texte minuté, TTML, d'informations de texte de sous-titre dans une charge utile, chaque document TTML d'informations de texte de sous-titre comportant des informations de minutage d'affichage relatives à l'échantillon associé, chaque information de minutage d'affichage indiquant au moins un instant de début d'affichage pour un sous-titre de la pluralité de sous-titres qui doit être affiché dans l'échantillon associé, et pour chaque échantillon de la pluralité d'échantillons consécutifs, un instant de début de l'échantillon considéré coïncidant avec l'instant de début d'affichage pour un sous-titre parmi la pluralité de sous-titres ou un instant de fin de l'échantillon considéré coïncidant avec un instant de fin d'affichage pour un sous-titre parmi la pluralité de sous-titres ; et
une unité (210) de commande configurée pour commander l'affichage de sous-titres sur la base des documents TTML d'informations de texte de sous-titre disposés dans les paquets de PES, les informations de minutage d'affichage dans un premier paquet de PES parmi les paquets de PES n'indiquant pas un instant de fin d'affichage pour le sous-titre, les informations de minutage d'affichage dans un second paquet de PES subséquent parmi les paquets de PES indiquant l'instant de fin d'affichage pour le sous-titre, l'affichage du sous-titre devant prendre fin dans l'échantillon associé au second paquet de PES, et l'unité (210) de commande étant configurée pour mettre fin à l'affichage de sous-titres sur la base des informations de minutage d'affichage disposées dans le second paquet de PES.

4. Dispositif (200) de réception selon la revendication 3, chacun des paquets de PES comprenant un en-tête respectif doté d'une estampille temporelle indiquant l'instant de début de l'échantillon associé.

5. Procédé d'émission destiné à émettre une pluralité de sous-titres pour différentes régions, le procédé comportant les étapes consistant à :
générer, pour chaque échantillon d'une pluralité d'échantillons consécutifs de durée variable, un paquet respectif de flux élémentaire en mode paquet, PES, comportant un document en langage de balisage de texte minuté, TTML, d'informations de texte de sous-titre dans une charge utile, chaque document TTML d'informations de texte de sous-titre comportant des informations de minutage d'affichage relatives à l'échantillon associé, chaque information de minutage d'affichage indiquant au moins un instant de début d'affichage pour un sous-titre de la pluralité de sous-titres qui doit être affiché dans l'échantillon associé, les informations de minutage d'affichage dans un premier paquet de PES parmi les paquets de PES n'indiquant pas un instant de fin d'affichage pour le sous-titre, les informations de minutage d'affichage dans un second paquet de PES subséquent parmi les paquets de PES indiquant l'instant de fin d'affichage pour le sous-titre, et l'affichage du sous-titre devant prendre fin dans l'échantillon associé au second paquet de PES ; et
émettre les paquets de PES comme un flux de sous-titres, pour chaque échantillon de la pluralité d'échantillons consécutifs, un instant de début de l'échantillon considéré coïncidant avec l'instant de début d'affichage pour un sous-titre parmi la pluralité de sous-titres ou un instant de fin de l'échantillon considéré coïncidant avec un instant de fin d'affichage pour un sous-titre parmi la pluralité de sous-titres.

6. Procédé d'émission selon la revendication 5, chacun des paquets de PES comprenant un en-tête respectif doté d'une estampille temporelle indiquant l'instant de début de l'échantillon associé.

7. Procédé de réception destiné à recevoir une pluralité de sous-titres pour différentes régions, le procédé comportant les étapes consistant à :
recevoir, pour chaque échantillon d'une pluralité d'échantillons consécutifs de durée variable, un paquet respectif de flux élémentaire en mode paquet, PES, comportant un document en langage de balisage de texte minuté, TTML, d'informations de texte de sous-titre dans une charge utile, chaque document TTML d'informations de texte de sous-titre comportant des informations de minutage d'affichage relatives à l'échantillon associé, chaque information de minutage d'affichage indiquant au moins un instant de début d'affichage pour un sous-titre de la pluralité de sous-titres qui doit être affiché dans l'échantillon associé, et pour chaque échantillon de la pluralité d'échantillons consécutifs, un instant de début de l'échantillon considéré coïncidant avec l'instant de début d'affichage pour un sous-titre parmi la pluralité de sous-titres ou un instant de fin de l'échantillon considéré coïncidant avec un instant de fin d'affichage pour un sous-titre parmi la pluralité de sous-titres ; et
commander l'affichage de sous-titres sur la base des documents TTML d'informations de texte de sous-titre disposés dans les paquets de PES, les informations de minutage d'affichage dans un premier paquet de PES parmi les paquets de PES n'indiquant pas un instant de fin d'affichage pour le sous-titre, les informations de minutage d'affichage dans un second paquet de PES subséquent parmi les paquets de PES indiquant l'instant de fin d'affichage pour le sous-titre, l'affichage du sous-titre devant prendre fin dans l'échantillon associé au second paquet de PES, et l'affichage de sous-titres prenant fin sur la base des informations de minutage d'affichage disposées dans le second paquet de PES.

8. Procédé de réception selon la revendication 7, chacun des paquets de PES comprenant un en-tête respectif doté d'une estampille temporelle indiquant l'instant de début de l'échantillon associé.
